# EUROPEAN PATENT APPLICATION

(11) **EP 4 205 836 A1**
(43) Date of publication of application: **05.07.2023**
(21) Application number: 22216948.4
(22) Date of filing: 28.12.2022
(51) Int. Cl.: B01D 61/22, B01D 65/10

(54) **BULK FILL SYSTEM WITH SERIAL FLUID FILTRATION ASSEMBLY AND METHOD OF USING SAME FOR AUTOMATED AIR TRANSFER**

(30) Priority: 31.12.2021 US 202163295833 P; 06.12.2022 US 202218062337
(71) Applicant: Pall Corporation, Port Washington, NY 11050 (US)
(72) Inventor: MEYER, Bernhard Anton, 63303 Dreieich (DE); BRETSCHNEIDER, Jens, 63303 Dreieich (DE)
(74) Representative: Hoeger, Stellrecht & Partner Patentanwälte mbB

(57) **Abstract**

Embodiments of a fluid filtration system constructed in accordance with principles of the present disclosure can be used to automatically condition the single use filter for efficient use thereof. For example, in embodiments, the fluid filtration system can include a filter conditioning program containing at least one of a filter priming module, a filter flushing module, and a filter pressurizing module.

## Description

### CROSS-REFERENCE TO RELATED APPLICATIONS

This patent application claims the benefit of priority to U.S. Non-Provisional Patent Application No. 18/062,337, filed December 6, 2022, and entitled "Bulk Fill System with Serial Fluid Filtration Assembly and Method of Using Same for Automated Air Transfer," which claims priority to U.S. Provisional Patent Application No. 63/295,833, filed December 31, 2021, and entitled, "Fluid Filtration System with Single Use Filter and Method of Using Same For Automated Filter Conditioning," which are incorporated in their entirety herein by this reference.

### BACKGROUND OF THE INVENTION

The use of a single-use system (SUS) is becoming more widespread for biopharmaceutical applications. An SUS can be used in systems such as, bioreactors and mixing systems. Exemplary upstream SUS applications include media preparation processes such as mixing and filtration, including tangential flow filtration (TFF), for example. Examples of downstream SUS applications include chromatography concentration and diafiltration and buffer preparation, for example.

An aspect of biopharmaceutical processing involves managing the movement of liquid through a myriad of elements including tubing, valves, filters, and sensors. The adoption of an SUS can offer several advantages over conventional reusable stainless steel systems. Single-use technology can increase process flexibility and reduce cross contamination risks; reduce or even eliminate the need for cleaning; reduce requirements for in-house sterilization, such as by autoclaving, and cleaning chemical inventory; and lower process downtime.

Sufficient filter priming and wetting can be a part of various filter processes to help ensure reliable, sufficient filter performance within filtration processes. Manual interaction and unsuitable component setup during these operations can lead to failures and/or reduced filter performance.

There is a continued need in the art for single use applications related to the filtration of fluid. For example, there is a continued need in the art to provide additional solutions for filtering fluid in a sterile manner under conditions which improve the conditioning of the filter for use in its intended application.

It will be appreciated that this background description has been created to aid the reader, and is not to be taken as an indication that any of the indicated problems were themselves appreciated in the art. While the described principles can, in some aspects and embodiments, alleviate the problems inherent in other systems, it will be appreciated that the scope of the protected innovation is defined by the attached claims, and not by the ability of any disclosed feature to solve any specific problem noted herein.

### BRIEF SUMMARY OF THE INVENTION

The present disclosure, in one aspect, is directed to embodiments of a fluid filtration system. In one embodiment, a fluid filtration system includes a workstation, a pump, a first single use filter, a second single use filter, a fluid supply conduit, a serial filter conduit, a first vent conduit, a second vent conduit, and a control unit.

The workstation includes a cabinet. The pump is supported by the cabinet and is adapted to selectively produce a flow of fluid.

The first single use filter is removably mounted to the workstation. The first single use filter has an upstream end and a downstream end. The second single use filter is removably mounted to the workstation. The second single use filter has an upstream end and a downstream end.

The upstream end of the first single use filter is in fluid communication with the pump via the fluid supply conduit. The fluid supply conduit includes a first vent junction and a fluid supply valve. The fluid supply valve is disposed between the first vent junction and the pump.

The downstream end of the first single use filter is in fluid communication with the upstream end of the second single use filter via the serial filter conduit. The serial filter conduit includes a second vent junction and a serial filter valve. The serial filter valve is disposed between the downstream end of the first single use filter and the second vent junction.

The first vent conduit is in fluid communication with the first vent junction of the fluid supply conduit such that the upstream end of the first single use filter is in fluid communication with the first vent conduit via the first vent junction. The first vent conduit includes a first outlet, a first liquid sensor, and a first vent valve. The first liquid sensor is disposed between the first vent junction and the first outlet. The first vent valve is disposed between the first liquid sensor and the first outlet. The first liquid sensor is configured to generate a first liquid detection signal in response to detecting liquid in the first vent conduit.

The second vent conduit is in fluid communication with the second vent junction of the serial filter conduit such that the upstream end of the second single use filter is in fluid communication with the second vent conduit via the second vent junction. The second vent conduit includes a second outlet, a second liquid sensor, and a second vent valve. The second liquid sensor is disposed between the second vent junction and the second outlet. The second vent valve is disposed between the second liquid sensor and the second outlet. The second liquid sensor is configured to generate a second liquid detection signal in response to detecting liquid in the second vent conduit.

The control unit is in electrical communication with the first and second liquid sensors to receive the first and second liquid detection signals respectively therefrom. The control unit includes a processor and a non-transitory computer readable medium bearing a filter conditioning program containing a filter priming module. The processor is arranged with the computer readable medium to execute the filter conditioning program. The processor is configured to perform a priming operation on the first and second single use filters based upon instructions from the filter priming module.

In another embodiment, a fluid filtration system includes a first single use filter and a second single use filter, a fluid supply conduit, a serial filter conduit, a first vent conduit, a second vent conduit, and a control unit. The first and second single use filters each has an upstream end and a downstream end.

The upstream end of the first single use filter is in fluid communication with the fluid supply conduit. The fluid supply conduit includes a first vent junction and a fluid supply valve. The first vent junction is disposed between the fluid supply valve and the upstream end of the first single use filter.

The downstream end of the first single use filter is in fluid communication with the upstream end of the second single use filter via the serial filter conduit. The serial filter conduit includes a second vent junction and a serial filter valve. The serial filter valve is disposed between the downstream end of the first single use filter and the second vent junction. The second vent junction is disposed between the serial filter valve and the upstream end of the second single use filter.

The first vent conduit is in fluid communication with the first vent junction of the fluid supply conduit such that the upstream end of the first single use filter is in fluid communication with the first vent conduit via the first vent junction. The second vent conduit is in fluid communication with the second vent junction of the serial filter conduit such that the upstream end of the second single use filter is in fluid communication with the second vent conduit via the second vent junction. The second vent conduit includes a second vent liquid sensor. The second vent liquid sensor is configured to generate a second liquid detection signal in response to detecting liquid in the second vent conduit.

The control unit in electrical communication with the second vent liquid sensor to receive the second liquid detection signal therefrom. The control unit includes a processor and a non-transitory computer readable medium bearing a filter conditioning program containing a filter priming module. The processor is arranged with the computer readable medium to execute the filter conditioning program. The processor is configured to perform a priming operation on the first and second single use filters based upon instructions from the filter priming module.

In another aspect, the present disclosure is directed to embodiments of techniques for conditioning a single use filter in a fluid filtration system. In one embodiment, a method of conditioning a fluid filtration system includes removably mounting a first single use filter and a second single use filter to a workstation. The workstation includes a cabinet.

An upstream end of the first single use filter is fluidly connected to a pump via a fluid supply conduit. The pump is supported by the cabinet. The fluid supply conduit includes a first vent junction and a fluid supply valve. The fluid supply valve is disposed between the first vent junction and the pump.

A downstream end of the first single use filter is fluidly connected to an upstream end of the second single use filter to via a serial filter conduit. The serial filter conduit includes a second vent junction and a serial filter valve. The serial filter valve is disposed between the downstream end of the first single use filter and the second vent junction.

The fluid supply valve is opened to open the fluid supply conduit. The serial filter valve is opened to open the serial filter conduit. The pump is operated to deliver the flow of fluid toward the upstream end of the second single use filter such that gas in the serial filter conduit is displaced to a second vent conduit via the second vent junction. Operation of the pump is ceased in response to the cessation of receiving the second liquid detection signal in response to detecting no liquid in the second vent conduit at a predetermined location.

Further and alternative aspects and features of the disclosed principles will be appreciated from the following detailed description and the accompanying drawings. As will be appreciated, the fluid filtration systems and the methods of conditioning a fluid filtration system disclosed herein are capable of being carried out in other and different embodiments, and capable of being modified in various respects. Accordingly, it is to be understood that both the foregoing general description and the following detailed description are exemplary and explanatory only and do not restrict the scope of the appended claims.

### BRIEF DESCRIPTION OF THE SEVERAL VIEWS OF THE DRAWINGS

FIG. 1 is a perspective view of an embodiment of a filtration skid constructed in accordance with principles of the present disclosure, including an embodiment of a fluid filtration system constructed in accordance with principles of the present disclosure.
FIG. 2 is another perspective view of the filtration skid of FIG. 1, with a cabinet thereof illustrated in broken lines for illustrative purposes.
FIG. 3 is a side elevational view of the filtration skid of FIG. 1.
FIG. 4 is a schematic elevational view of three sides of the filtration skid of FIG. 1.
FIG. 5 is a schematic diagram of an embodiment of a fluid filtration system constructed in accordance with principles of the present disclosure, illustrating a filter integrity test operation.
FIG. 6 is a schematic diagram of the fluid filtration system as in FIG. 5, illustrating a fluid recovery operation.
FIG. 7 is a view of an embodiment of a graphical user interface suitable for use with an integrity test program constructed according to principles of the present disclosure.
FIGS. 8 and 9 are schematic diagrams of the fluid filtration system as in FIG. 5, illustrating an upstream filter priming operation.
FIG. 10 is a schematic diagram of the fluid filtration system as in FIG. 5, illustrating a downstream filter priming operation.
FIG. 11 is a schematic diagram of the fluid filtration system as in FIG. 5, illustrating a filter flushing operation.
FIG. 12 is a schematic diagram of the fluid filtration system as in FIG. 5, illustrating an upstream filter pressurizing operation for enhanced filter membrane wetting.
FIG. 13 is a perspective view of an embodiment of a fill skid constructed in accordance with principles of the present disclosure, including an embodiment of a fluid filtration system constructed in accordance with principles of the present disclosure.
FIG. 14 is a side elevational view of the fill skid of FIG. 16, illustrating the fluid filtration system having a serial arrangement of a pair of single use filters.
FIG. 15 is a schematic diagram of an embodiment of a fluid filtration system constructed in accordance with principles of the present disclosure, illustrating a serial arrangement of a pair of single use filters and suitable for use with the fill skid of FIG. 13.
FIG. 16 is a schematic diagram of the fluid filtration system as in FIG. 15, illustrating an air transfer operation.
FIG. 17 is a schematic diagram of the fluid filtration system as in FIG. 15, further illustrating the air transfer operation.

It should be understood that the drawings are not necessarily to scale and that the disclosed embodiments are illustrated diagrammatically and in partial views. In certain instances, details which are not necessary for an understanding of this disclosure or which render other details difficult to perceive may have been omitted. It should be understood that this disclosure is not limited to the particular embodiments illustrated herein.

### DETAILED DESCRIPTION OF THE INVENTION

Embodiments of a fluid filtration system constructed in accordance with principles of the present disclosure are adapted to be used with embodiments of a method of conditioning a single use filter in a fluid filtration system following principles of the present disclosure. In embodiments, the fluid filtration system is incorporated into a filtration skid or a fill skid including at least one single use filter mounted thereto and equipment incorporated into the skid configured to perform at least one conditioning operation upon the single use filter, such as, e.g., a priming operation controlled by a control unit based upon computer-executable instructions stored upon a computer readable medium.

Embodiments of a fluid filtration system constructed in accordance with principles of the present disclosure can be used in biopharmaceutical environments, but can be used in other industrial applications where different fluids, solutions, reagents and/or chemicals are filtered. For example, embodiments of a fluid filtration system constructed in accordance with principles of the present disclosure are adapted to be used in a bioprocessing system in which a supply of fluid is separated and filtered in a bioprocessing application (such as a chromatography/ tangential flow filtration (TFF) application, for example). Embodiments of a fluid filtration system constructed in accordance with principles of the present disclosure can be used to perform applications related to formulating, filling, and other applications related to filtering liquids in a sterile manner.

Embodiments of a fluid filtration system constructed in accordance with principles of the present disclosure are configured with a filter integrity test ("FIT") device that is integrated into the filtration skid's control unit to enable repeatable, reliable fully-automated filter integrity testing with seamless processing of in-situ, pre- and post-use filter integrity testing. Embodiments of a fluid filtration system constructed in accordance with principles of the present disclosure are configured to perform live testing executed with the incorporated FIT device according to predetermined test protocols with no additional manual interaction necessary to perform FIT.

Embodiments of a fluid filtration system constructed in accordance with principles of the present disclosure include a FIT device incorporated into the filtration skid and configured to be used to help recover filtered product from the discharge conduit via directed application of a flow of pressurized gas, such as pressurized air or nitrogen, for example, through the filter by the FIT device. The product recovered as fluid can be pressed through the filter into the product outlet of the discharge conduit via operation of the FIT device through an established operational routine.

Embodiments of a fluid filtration system constructed in accordance with principles of the present disclosure can be used to automatically condition the single use filter for efficient use thereof. For example, in embodiments, the fluid filtration system can include a filter conditioning program containing at least one of a filter priming module, a filter flushing module, and a filter pressurizing module.

In embodiments, the fluid filtration system can include a filter conditioning program configured to facilitate the priming and wetting of a filter, including a single use filter. In embodiments, the fluid filtration system includes a conduit configured to deliver a flow of pressurized gas to the upstream side of the filter to enhance wetting. In embodiments, an integrity test device can be used to provide the source of pressurized gas via a FIT test operation to enhance wetting. The results of this FIT test operation may be disregarded in some applications. In other embodiments, other equipment configured to provide a suitable flow of pressurized gas to the upstream side of the filter can be used, as will be readily understood by one skilled in the art.

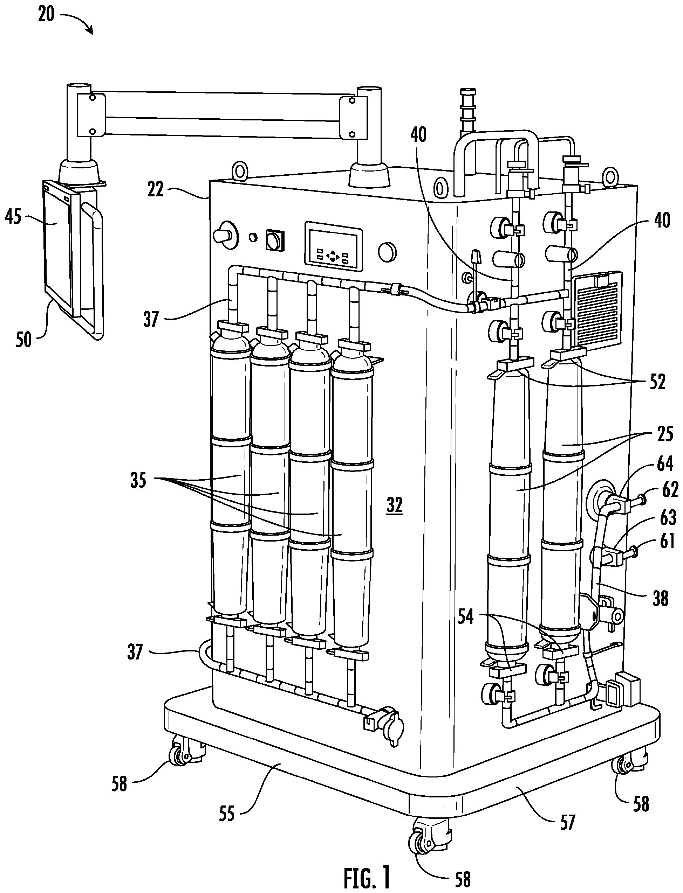

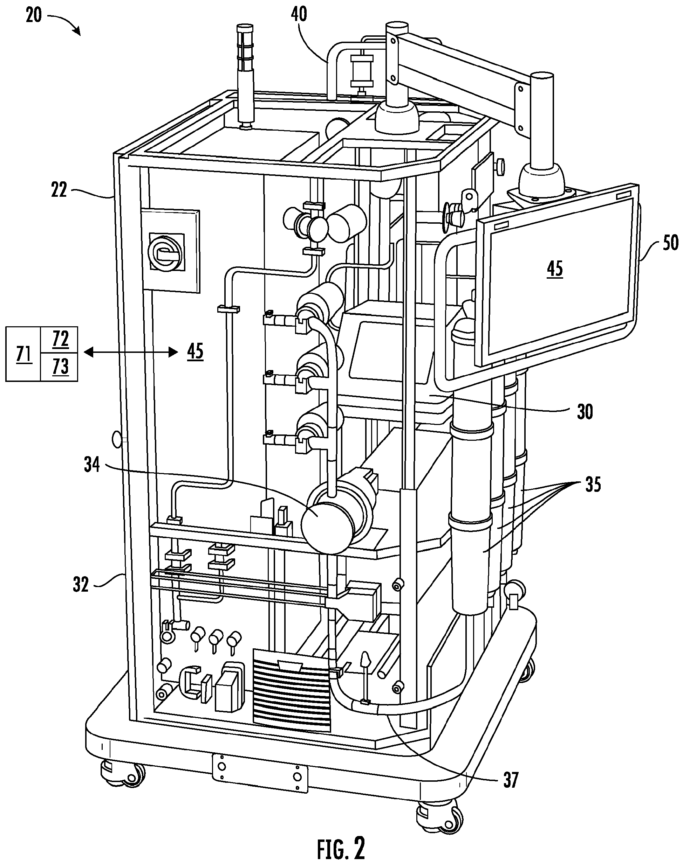

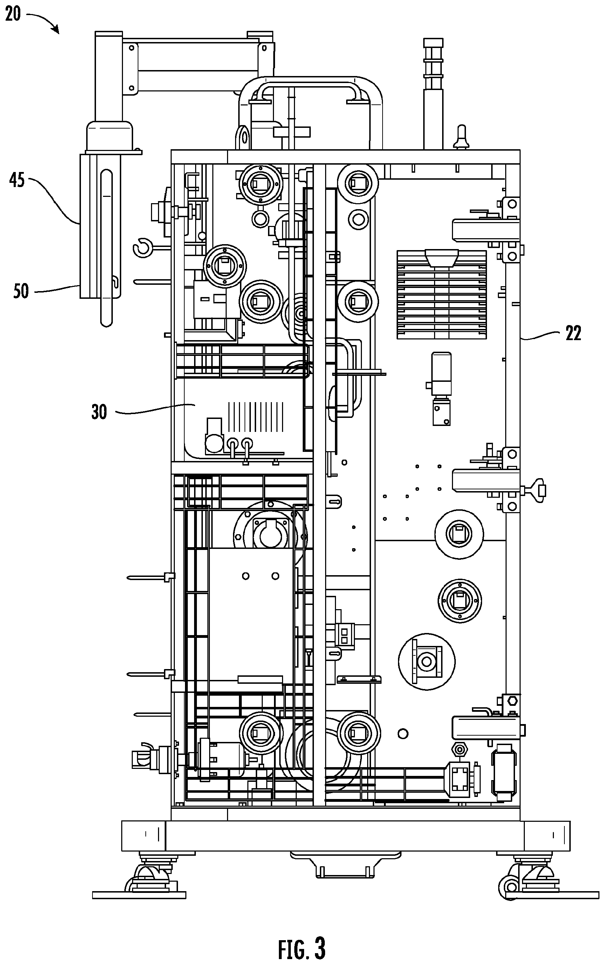

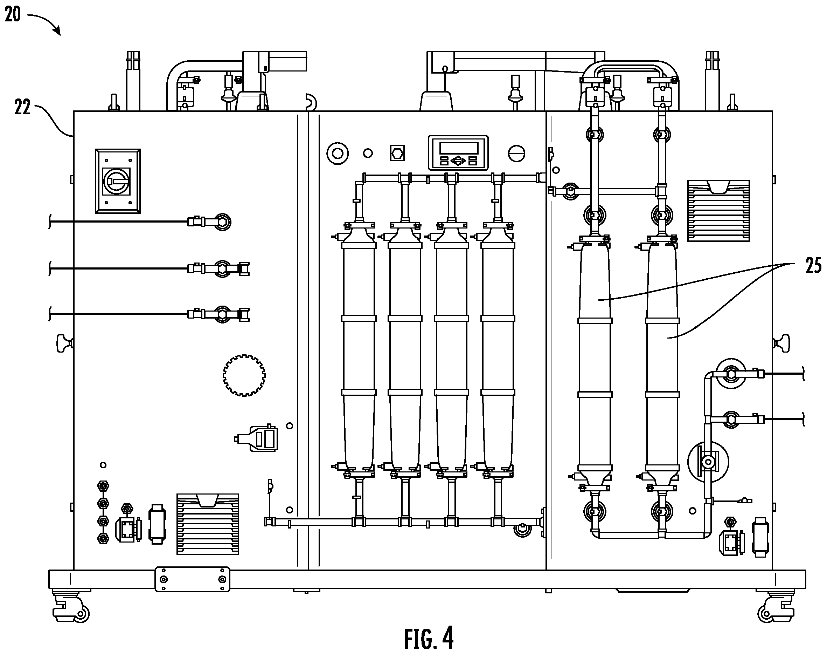

Turning now to the FIGURES, there is shown in FIGS. 1-4 an embodiment of a fluid filtration system 20 constructed in accordance with principles of the present disclosure that is incorporated into a workstation in the form of a filtration skid 22 constructed in accordance with principles of the present disclosure. In embodiments, the filtration skid 22 includes at least one single use filter 25 and an integrity test device 30 *(see, e.g.,* FIG. 2) in selective fluid communication with the single use filter 25 for conducting at least one FIT.

Referring to FIGS. 1-3, the illustrated filtration skid 22 includes a cabinet 32, a pump 34, a plurality of pre-filters 35, a pair of single use filters 25, a fluid supply conduit 37, a discharge conduit 38, an integrity test device 30, a test conduit 40, a control unit 45, and a display device 50. One skilled in the art will understand after reviewing the present disclosure that, in other embodiments, the system can have different configurations. For example, in embodiments, the pre-filters 35 can be omitted, and/or only one single-use filter 25 can be provided.

In embodiments of a fluid filtration system 20 constructed in accordance with principles of the present disclosure, an upstream end 52 of each single use filter 25 is fluidly connected to the pump 34 via the fluid supply conduit 37 and to the integrity test device 30 via the test conduit 40. The pump 34 and the integrity test device 30 are supported by the cabinet 32. The integrity test device 30 is adapted to be fluidly connected to a source of pressurized gas. The integrity test device 30 is operable to direct a flow of pressurized gas through the test conduit 40 to perform a test operation on each single use filter 25. In embodiments, the test operation comprises one of a forward flow test, a water intrusion test, a bubble point test, a leak test, and a pressure decay test. In embodiments, the fluid filtration system 20 can be used with any suitable fluid, which can be stored in a suitable container, such as a tote, for example, which is in fluid communication with the pump 34.

Referring to FIG. 1, the filtration skid 22 includes a trolley 55. The cabinet 32 is mounted atop the trolley 55 and is configured to house hydraulic and automation equipment of the fluid filtration system 20. The trolley 55 includes a base 57 and a plurality of wheels 58 rotatably attached to the base 57. In the illustrated embodiment, the base 57 is rectangular, and there is a wheel 58 rotatably attached at each corner of the base 57. In embodiments, the base 57 can be substantially square-shaped.

The cabinet 32 is mounted to the base 57 of the trolley 55. In embodiments, the cabinet 32 comprises a storage unit for automation and hydraulic equipment and is made from a suitable metal, such as stainless steel, for example. The cabinet 32 defines an interior cavity which can be suitably configured for storing and supporting components of the liquid filtration system, including the integrity test device 30. Referring to FIG. 2, in embodiments, the cabinet 32 houses at least one pump body 34, the integrity test device 30, and the control unit 45.

The pump 34 is supported by the cabinet 32 and is adapted to selectively produce a flow of fluid. The pump 34 is configured to draw fluid from a supply of fluid(s) (not shown) and deliver it to the filters. The pump 34 is in operable relationship with the control unit 45 such that the control unit 45 can selectively operate the pump 34. The pump 34 is adapted to selectively produce a flow of fluid to deliver a supply of fluid to the filters. In embodiments, the pump 34 can be any suitable pump capable of producing a flow of fluid through the filters and that meets the specification of the intended application. In embodiments, the pump 34 comprises a variable displacement pump. In embodiments, the fluid filtration system 20 includes a plurality of pumps 34 which can be used to deliver one or more types of fluid to the filters 35, 25.

Referring to FIGS. 1 and 2, the pre-filters 35 are fluidly connected in parallel to the pump 34 via the fluid supply conduit 37. Referring to FIG. 1, the single use filters 25 are fluidly connected in parallel to the bank of pre-filters 35 via the fluid supply conduit 37. The bank of parallel pre-filters 35 are connected in series to the parallel pair of single use filters 25.

Referring to FIG. 1, in the illustrated embodiment, each conduit 37, 38, 40 comprises a tubing arrangement that fluidly interconnects various components of the fluid filtration system 20. In embodiments, the tubing arrangement comprises a plurality of flexible tubing lines adapted to be selectively occluded by a pinch valve externally mounted thereto. In embodiments, the flexible tubing can be made from any suitable material, such as, silicone, thermoplastic elastomer (TPE), etc. In embodiments, the conduits comprise a flexible, plastic-based (e.g. PVC, PP, PE) hose. In embodiments, the conduits comprise any one of a range of suitable materials and assemblies as will be readily known to one of ordinary skill in the art, such as, e.g., silicone tubing, plastic injection molded adapters, and commercially-available connectors and disconnectors (e.g., Kleenpack^{®} Presto sterile connectors and Kleenpack^{®} sterile disconnectors from Pall Corporation of Port Washington, New York), and those disclosed in U.S. Patent Application Publication No. US 2017/0284584.

In embodiments, the filtration skid 22 can have a number of valve arrangements associated with the conduits. In embodiments, each conduit 37, 38, 40 can be associated with control valves in electrical communication with the control unit 45, which in turn is configured to control the operational condition of the valves between an open and closed condition to direct the flow of fluid therethrough. The valves can comprise any suitable valve adapted to selectively occlude the conduit with which it is associated.

In the illustrated embodiment, the valves comprise pinch valves adapted to control the flow of fluid within the system by occluding the tubing of the conduit to effectively occlude conduit with which it is associated. The valves are secured to the skid 22 and can provide the means for removably mounting the conduits 37, 38, 40 to the skid 22. The valves are supported by the cabinet 32 such that a clamping portion of each valve projects from an exterior surface of the cabinet 32 for being respectively associated with a conduit. In other embodiments, a different type of valve can be used, as will be readily familiar to one skilled in the art, such as a solenoid valve, for example. In embodiments, the valves can be operated by a suitable source, such as, a pneumatic source or an electrical power source, for example. In embodiments, the operation of the valves of the filtration skid 22 can be coordinated via the control unit 45 which is suitably programmed to operate one or more desired fluid distributing sequences.

Referring to FIG. 1, the pre-filters 35 and the single use filters 25 are removably mounted to the cabinet 32. In the illustrated embodiment, the filtration skid 22 includes four pre-filters 35 and two single use filters 25. In other embodiments, the filtration skid 22 can include a different number of pre-filters 35 and/or single use filters 25, including one pre-filter 35 and/or one single use filter 25. In embodiments, the pre-filter 35 can be omitted.

Referring to FIG. 1, each single use filter 25 is removably mounted to the workstation 22. Each single use filter 25 has an upstream end 52 and a downstream end 54. The upstream end 52 of each single use filter 25 is in fluid communication with the pump 34 via the fluid supply conduit 37 *(see also* FIG. 2). The downstream end 54 of each single use filter 25 is in fluid communication with the discharge conduit 38

In the illustrated embodiment, each single use filter 25 comprises a replaceable part that is installed once in the filtration skid 22 for use in a bioprocessing application and uninstalled thereafter for disposal thereof. After completing its intended use in the bioprocessing application, the respective single use filter 25 can be disconnected from the filtration skid 22 and replaced with another single use filter 25 having a similar construction. In embodiments, the filters 25 comprise any one of a range of suitable materials and assemblies as will be readily known to one of ordinary skill in the art.

A variety of commercially-available filters, filter media (e.g., fibrous media, membranes, and/or composites), filter elements, filter modules, and filter sizes are suitable for use as the pre-filter 35 and the single use filter 25 in embodiments of a fluid filtration system constructed according to principles of the present disclosure. Suitable filters include, for example, Pegasus Prime filters commercially available from Pall Corporation of Port Washington, New York. Exemplary filters and filter elements include pleated filters and "laid-over-pleat" (LOP) filter configurations.

In embodiments, the pre-filter 35 and the single use filter 25 comprise a filter and filter element having any suitable pore structure, e.g., a pore size (for example, as evidenced by bubble point, or by KL as described in, for example, U.S. Patent No. 4,340,479, or evidenced by capillary condensation flow porometry), a pore rating, a pore diameter (e.g., when characterized using the modified OSU F2 test as described in, for example, U.S. Patent No. 4,925,572), or removal rating that reduces or allows the passage therethrough of one or more materials of interest as the fluid is passed through the element. The pore structure used depends on the composition of the fluid to be treated, and the desired effluent level of the treated fluid.

In embodiments, the pre-filter 35 and the single use filter 25 comprise a filter and filter element having any desired critical wetting surface tension (CWST, as defined in, for example, U.S. Patent No. 4,925,572). The porous membrane can have any desired critical wetting surface tension (CWST, as defined in, for example, U.S. Patent No. 4,925,572). The CWST can be selected as is known in the art, e.g., as additionally disclosed in, for example, U.S. Patent Nos. 5,152,905, 5,443,743, 5,472,621, and 6,074,869. The surface characteristics of the element can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface.

In embodiments, the pre-filter 35and the single use filter 25 can include additional elements, layers, or components, that can have different structures and/or functions, e.g., at least one of the following: prefiltration, support, drainage, spacing and cushioning. Illustratively, in embodiments, the pre-filter 35 and the single use filter 25 can also include at least one additional element such as a mesh and/or a screen.

In embodiments, the pre-filter 35 and the single use filter 25 comprise a plurality of filter elements (typically, the filter is arranged between an outer cage and an inner core to provide a filter module) disposed in a housing comprising an inlet and an outlet and defining a fluid flow path between the inlet and the outlet, wherein the filter is across the fluid flow path. Preferably, the pre-filter 35 and the single use filter 25 are sterilizable as is known in the art (e.g., autoclaved, gamma irradiated, etc.). Any housing of suitable shape and providing an inlet and an outlet may be employed.

Referring to FIG. 1, the discharge conduit 38 is in fluid communication with the downstream end 54 of each single use filter 25. The discharge conduit 38 includes a first outlet 61 and a second outlet 62 and a first outlet valve 63 and a second outlet valve 64 respectively associated with the first outlet 61 and the second outlet 62. The first outlet 61 is adapted for fluid connection to a product container, and the second outlet 62 is adapted for fluid connection to a waste repository.

Referring to FIG. 2, the integrity test device 30 is supported by the cabinet 32 and is in fluid communication with the upstream end 52 of each single use filter 25 via the test conduit *40 (see also* FIG. 1). The integrity test device 30 is adapted to be connected to a source of pressurized gas, such as pressurized air or nitrogen, for example, and to selectively direct a flow of pressurized gas through the respective test conduit 40 to each single use filter 25. The test conduit 40 can comprise a high pressure manifold section located upstream of the single use filters 25 configured to selectively deliver pressurized gas to one or both of the single use filters 25. The test conduit 40 can include a stainless steel gas line from the integrity test device 30 to the manifold secion.

In embodiments, any integrity test device 30 suitable for performing the intended integrity testing can be used. In embodiments, a commercially-available integrity test device configured to conduct pre- and post-use integrity testing can be used. In embodiments, a variety of integrity test instruments are suitable for use, such as, for example, a PALLTRONIC Flowstar IV Filter integrity test instrument, a PALLTRONIC Flowstar IV Filter integrity test instrument MUX Extension, a PALLTRONIC Flowstar LGR test instrument, or a PALLTRONIC Aqua WIT IV Filter Integrity Test System, which are commercially available from Pall Corporation of Port Washington, New York.

In embodiments, the integrity test device 30 is configured to conduct a variety of filter integrity tests (FIT) as will be familiar to one skilled in the art, including pre-use post sterilization and post-use tests. In embodiments, the integrity test device 30 is configured to conduct a FIT designed to ensure consistent filtration performance according to a regulatory body (e.g. FDA). In embodiments, the integrity test device 30 is configured to perform at least one FIT in accordance with a regulatory protocol to ensure filter performance according to a regulated performance specification. In embodiments, the integrity test device 30 is configured to perform each one of the following tests according to at least one predetermined protocol: a forward flow test, a water intrusion test, a bubble point test, a leak test, and a pressure decay test.

Referring to FIG. 2, in embodiments, the control unit 45 can comprise any suitable equipment configured to control the operation of at least one component of the liquid filtration system 20 when performing a filtering operation. In embodiments, the control unit 45 includes a processor 71, a non-transitory computer readable medium 72 bearing a fluid filtration program, a data storage device 73, and the display device 50. The processor 71 is arranged with the computer readable medium 72 to execute the fluid filtration program. The processor 71 is in operable arrangement with the display device 50 to selectively display output information from the fluid filtration program and/or to receive input information from a graphical user interface displayed by the display device 50.

In embodiments, the processor 71 of the control unit 45 comprises both a separate processor and a processor included in the integrity test device 30. In embodiments, the fluid filtration program includes an integrity test program. In embodiments, the integrity test device 30 includes a non-transitory computer readable medium bearing the integrity test program. The processor 71 is arranged with the computer readable medium 72 to execute the integrity test program. The processor 71 is in electrical communication with the integrity test device 30 to selectively operate the integrity test device 30 to perform a test operation on each single use filter 25 using the flow of pressurized gas based upon instructions from the integrity test program.

In embodiments, the fluid filtration program includes a filter conditioning program containing at least one of a filter priming module, a filter flushing module, and a filter pressurizing module. In embodiments, the fluid filtration program includes a filter conditioning program containing a filter priming module, a filter flushing module, and a filter pressurizing module.

The processor 71 can be configured to act as a controller to selectively operate at least one component of the fluid filtration system 20, such as the pump 34 and the valve arrangements, for example. In embodiments, the processor 71 is in electrical communication with the pump(s) and the valve arrangements to selectively operate the valves based upon instructions from the fluid filtration program.

In embodiments, a controller and the processor 71 can comprise separate devices, and the controller can be in operable communicative arrangement with the processor 71. In embodiments, the controller can include a user input and/or interface device having one or more user-actuated mechanisms (e.g., one or more push buttons, slide bars, rotatable knobs, a keyboard, and a mouse) adapted to generate one or more user actuated input control signals. In embodiments, the controller can be configured to include one or more other user-activated mechanisms to provide various other control functions for the fluid filtration system, as will be appreciated by one skilled in the art. The controller can be associated with the display device 50 which is adapted to display a graphical user interface. The graphical user interface can be configured to function as both a user input device and a display device in embodiments. In embodiments, the display device 50 can comprise a touch screen device adapted to receive input signals from a user touching different parts of the display screen. In embodiments, the controller can be in the form of a smart phone, a tablet, a personal digital assistant (e.g., a wireless, mobile device), a laptop computer, a desktop computer, or other type of device.

In embodiments, the processor 71 can comprise any suitable computing device(s), such as, a microprocessor, a mainframe computer, a digital signal processor, a portable computing device, a personal organizer, a device controller, a logic device (e.g., a programmable logic device configured to perform processing functions), a digital signal processing (DSP) device, or a computational engine within an appliance. In embodiments, the processor 71 also includes one or more additional input devices (e.g., a keyboard and a mouse).

The processor 71 can have one or more memory devices associated therewith to store data and information. The one or more memory devices can include any suitable type, including volatile and non-volatile memory devices, such as RAM (Random Access Memory), ROM (Read-Only Memory), EEPROM (Electrically-Erasable Programmable Read-Only Memory), flash memory, etc.

In embodiments, the control unit 45 is in electrical communication with each pump 34 used to deliver the fluid(s) to the filters 35, 25 and with each valve of the valve arrangements. The control unit 45 is configured to selectively operate the pump 34 and the valves according to logic and operation parameters contained in the fluid filtration program. In embodiments, the control unit 45 is configured to control at least one of a pump speed and a volume displacement of the pump 34 to control the amount of fluid being delivered to the single use filters 25. In the illustrated embodiment, the control unit 45 is configured to independently operate each valve of the different valve arrangements.

In embodiments, the processor 71 comprises a specially programmed processor that can be used to facilitate the control and the operation of the fluid filtration system 20. In embodiments, the processor 71 can be configured to receive input signals from the controller, to send input control signals to the controller, and/or to send output information to the controller. In the illustrated embodiment, the controller and the processor 71 comprise the same device, and the integrity test device 30 includes its own processor that can be controlled by the processor 71.

In one embodiment, the processor 71 is adapted to execute programming stored upon the non-transitory computer readable medium 72 to perform various methods, processes, and modes of operations in a manner following principles of the present disclosure. In embodiments, the non-transitory computer readable medium 72 can contain a fluid filtration program that is configured to implement an embodiment of a method of filtering fluid according to principles of the present disclosure. In embodiments, the fluid filtration program is configured to perform at least one fluid filtering operation. In embodiments, the fluid filtration program is configured to perform at least one fluid recovery operation.

In embodiments, the fluid filtration program includes a graphical user interface that can be displayed by the display device 50. The graphical user interface can be used to facilitate the inputting of commands and data by a user to the fluid filtration program and to display outputs generated by the fluid filtration program.

The fluid filtration program can be stored upon any suitable computer-readable storage medium. For example, in embodiments, a fluid filtration program following principles of the present disclosure can be stored upon a hard drive, floppy disk, CD-ROM drive, tape drive, zip drive, flash drive, optical storage device, magnetic storage device, and the like.

In embodiments, the processor 71 is in operable communication with the data storage device 73 which includes at least one database containing fluid filtration data. In embodiments, the fluid filtration program can be configured to store the fluid filtration data generated during operation of the system in the data storage device 73. In embodiments, the fluid filtration data can be associated in a logical manner with time data in the data storage device such that the various data can be retrievable for a given time.

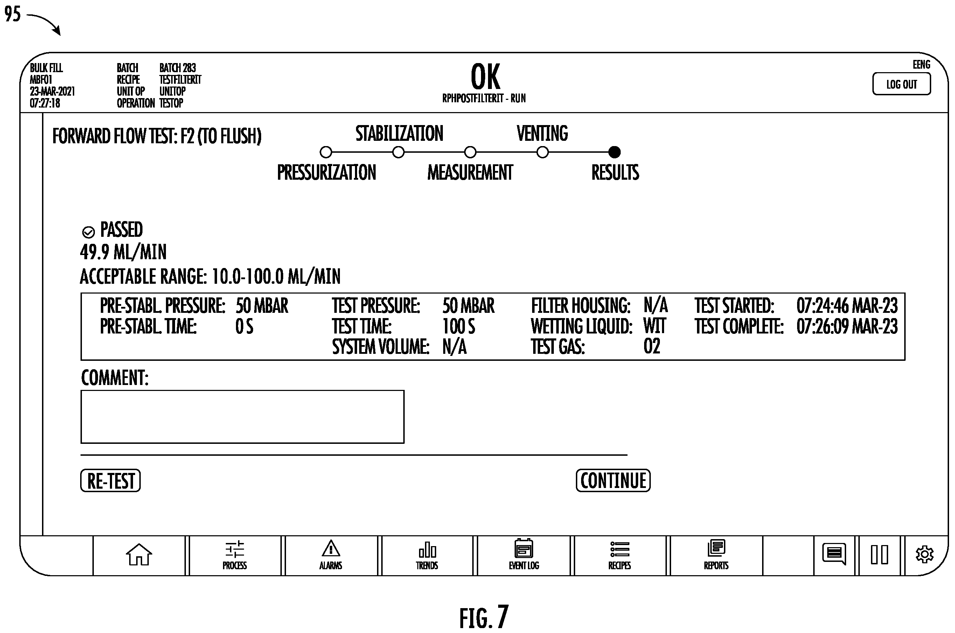

The display device 50 is in operable arrangement with the processor 71. In embodiments, the integrity test program is configured to perform the following steps as part of a test operation when executed by the processor 71: determine whether each single use filter 25 satisfied the test operation, generate a graphical display containing a graphical indication of whether the single use filter 25 satisfied the test operation, display the graphical display on the display device 50 *(see, e.g.,* FIG. 7).

In embodiments, the processor 71 is configured to display in the display device 50 fluid filtration data received from the integrity test device 30 and from at least one sensor in electrical communication with the control unit 71. The fluid filtration data can also be stored in the data storage device 73 operably arranged with the processor 71.

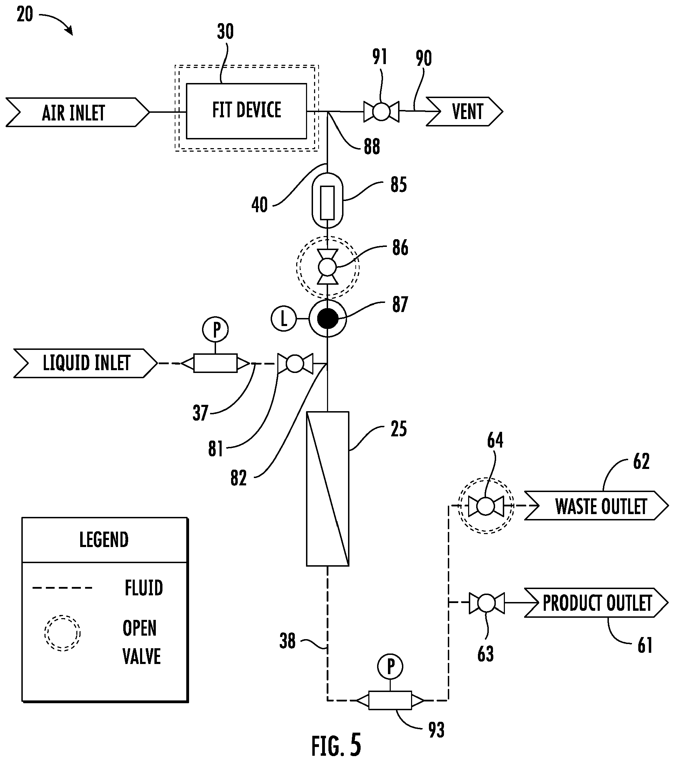

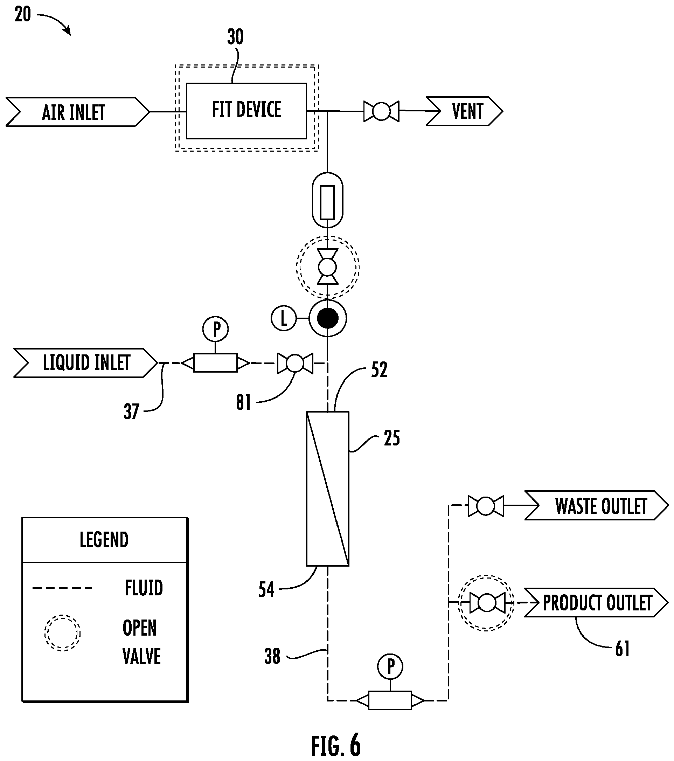

FIG. 5 is a schematic diagram of an embodiment of a fluid filtration system 20 constructed in accordance with principles of the present disclosure that illustrates a filter integrity test operation. The illustrated arrangement includes one single use filter 25. It should be understood that the description of this arrangement (as well as those shown in FIGS. 6 and 8-12) is applicable to each single use filter 25 included in a particular embodiment of a fluid filtration system constructed according to principles of the present disclosure.

The fluid supply conduit 37 includes a fluid supply valve 81 and a test junction 82. The test conduit 40 is fluidly connected to the single use filter 25 via the test junction 82 of the fluid supply conduit 37.

The test conduit 40 includes an air filter 85, a test conduit valve 86, and a liquid sensor 87. The air filter 85 is configured to filter particulate from fluid passing through the filter 85. The air filter 85 is disposed between the integrity test device 30 and the single use filter 25 such that the pressurized gas delivered to the single use filter 25 via the integrity test device 30 is filtered through the air filter 85. The test conduit 40 includes the liquid sensor 87 and the test conduit valve 86 to protect the air filter 85 from exposure to liquid.

The liquid sensor 87 is configured to generate a liquid detection signal in response to detecting liquid in the test conduit 40. The control unit 45 is in electrical communication with the liquid sensor 87 to receive the liquid detection signal therefrom. The test conduit valve 86 is arranged with the test conduit 40 to selectively occlude the test conduit 40.

The liquid sensor 87 is disposed between the integrity test device 30 and the test junction 82, and in particular between the air filter 85 and the test junction 82. The test conduit valve 86 is disposed between the air filter 85 and the liquid sensor 87.

The test conduit valve 86 is in operable arrangement with the control unit 45 such that the control unit 45 can operate the test conduit valve 86 in response to receiving the liquid detection signal. In embodiments, the control unit 45 is configured to cease operation of the pump(s) 34 and/or close the test conduit valve 86 in response to receiving the liquid detection signal to prevent the air filter 85 from becoming wetted with fluid.

In embodiments, the fluid filtration system 20 can include means for removing gas trapped within the conduits to enhance the accuracy and consistency of the fluid filtering process. In the illustrated embodiment, the test conduit 40 also includes a vent junction 88 for fluid communication with a vent conduit 90. The vent conduit 90 is in fluid communication with the test conduit 40 via the vent junction 88.

The vent conduit 90 includes a vent valve 91. The vent valve 91 is in operable arrangement with the control unit 45 such that the control unit 45 can selectively operate the vent valve 91.

In embodiments, the integrity test program can be configured to perform the following steps as part of the test operation when executed by the processor 71: close the fluid supply valve 81 to occlude the fluid supply conduit 37, open the test conduit valve 86 to open the test conduit 40, open the second outlet valve 64 to permit air flow through the single use filter 25, and operate the integrity test device 30 to direct the flow of pressurized gas through the test conduit 40 and through the single use filter 25. In embodiments, the test operation comprises one of a forward flow test, a water intrusion test, a bubble point test, a leak test, and a pressure decay test. In embodiments, the integrity test program is configured to perform the following step as part of the test operation when executed by the processor: close the vent valve 91 to occlude the vent conduit 90.

In embodiments, the integrity test program can be configured to perform the following steps as part of the test operation when executed by the processor: close the first outlet valve 63 to occlude the first outlet 61, and open the second outlet valve 64 to open the second outlet 62. In embodiments, the integrity test program can omit performance of the foregoing steps, but they are helpful to avoid unwanted fluid in the product outlet (that can cause unnecessary/unwanted dilution). In other embodiments, the integrity test program can be configured to perform the reverse of the foregoing steps as part of the test operation when executed by the processor, namely, open the first outlet valve 63 to open the first outlet 61, and close the second outlet valve 64 to close the second outlet 62.

The discharge conduit 38 includes a pressure sensor 93. The pressure sensor 93 is configured to generate a pressure signal indicative of the pressure measured in the discharge conduit 38. The control unit 45 is in electrical communication with the pressure sensor 93 to receive the pressure signal therefrom. In embodiments, the pressure sensor 93 can be used to confirm that the discharge conduit 38 is unpressurized.

In embodiments, the FIT device 30 includes an internal pressure sensor that can be operated independently to sense the pressure in the test conduit 40. In embodiments, the integrity test program is configured to determine whether a test condition of the test operation is satisfied based upon the pressure measured by the pressure sensor of the FIT device 30 within the upstream part of the single use filter 25 in the area of the test junction 82.

In embodiments, the fluid filtration system 20 can include means for recovering fluid from the single use filter that would otherwise be retained therein or not be discharged during the filtering operation. FIG. 6 is a schematic diagram of the fluid filtration system 20 illustrating a fluid recovery operation. Post-use, the fluid filtration system 20 can be operated to recover fluid from the single use filter 25 by directing pressurized gas through the filter 25. The fluid supply valve 81 can be closed such that fluid is prevent from flowing to the upstream end 52 of the single use filter 25 from the fluid supply conduit 37. The fluid supply valve 81 can be closed to ensure that the pressure (air) provided by the FIT device 30 is used to recover product from the single use filter 25 (and not flow/escape through the fluid supply conduit 37). Pressurized gas can be delivered by the integrity test device 30 through the single use filter 25. The product outlet of the discharge conduit 38 can be opened such that fluid driven from the single use filter 25 is conveyed from the downstream end 54 of the filter 25 through the discharge conduit 38 and out of the product outlet 61. In other embodiments, a separate source of pressurized gas can be provided for performing the fluid recovery operation.

FIG. 7 is a view of an embodiment of a graphical user interface 95 suitable for use with an integrity test program constructed according to principles of the present disclosure. In embodiments, the integrity test program is configured to determine whether the single use filter 25 satisfied the test operation, generate a graphical display containing a graphical indication of whether the single use filter 25 satisfied the test operation, display the graphical display on the display device 50. The graphical user interface 95 is an example of such a graphical display.

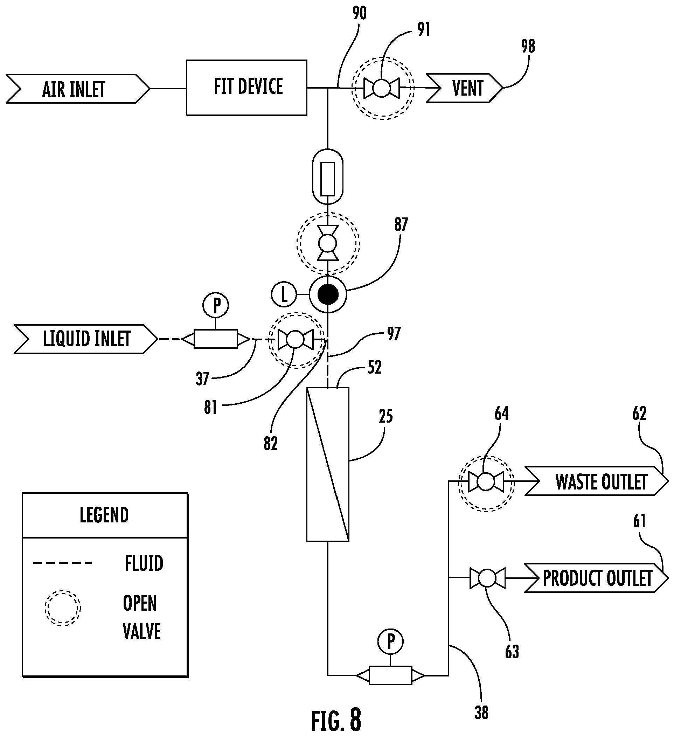

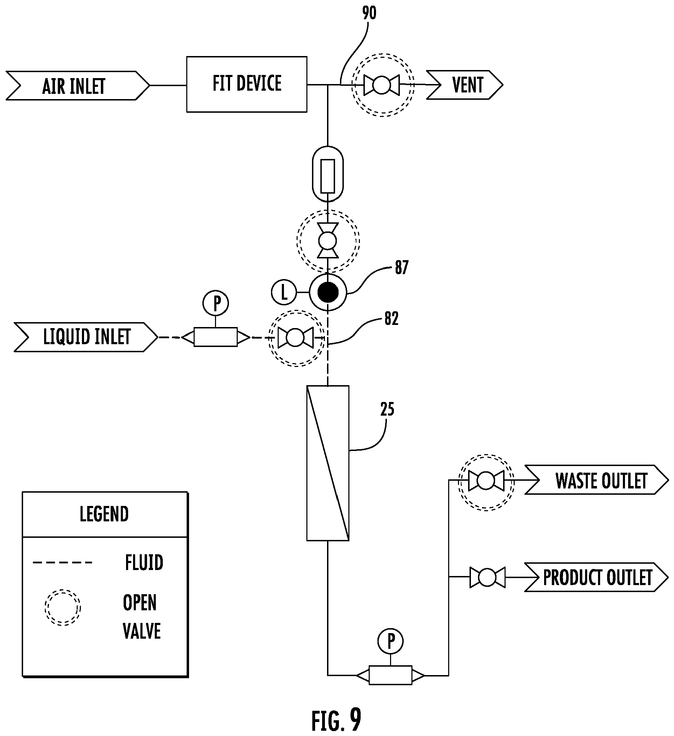

Referring to FIGS. 8-12, a series of filter conditioning sequences is shown. FIGS. 8 and 9 are schematic diagrams of the fluid filtration system as in FIG. 5, illustrating an upstream filter priming operation. Referring to FIG. 8, the upstream end 52 of the single use filter 25 is in fluid communication with the pump 34 via the fluid supply conduit 37. The vent conduit 90 is in fluid communication with the junction 82 of the fluid supply conduit 37 such that the upstream end 52 of the single use filter 25 is in fluid communication with the vent conduit 90 via the junction 82 and a common branch 97 extending between the junction 82 and the upstream end 52 of the single use filter 25. The vent conduit 90 includes an outlet 98, the liquid sensor 87, and the vent valve 91. The liquid sensor 87 is disposed between the junction 82 and the outlet 98. The vent valve 91 is disposed between the liquid sensor 87 and the outlet 98. The liquid sensor 87 is configured to generate a liquid detection signal in response to detecting liquid in the vent conduit 90.

The control unit 45 is in electrical communication with the liquid sensor 87 to receive the liquid detection signal therefrom. In embodiments, the control unit 45 is programmed with the filter conditioning program which contains a filter priming module. The processor 71 is in electrical communication with the pump 34, the fluid supply valve 81, the vent valve 91, and the liquid sensor 87 to perform a priming operation on the single use filter 25 based upon instructions from the filter priming module.

In embodiments, the filter priming module is configured to perform the following steps when executed by the processor 71: open the fluid supply valve 81 to open the fluid supply conduit 37, open the vent valve 91 to open the vent conduit 90, close the first outlet valve 63 to occlude the first outlet 61 of the discharge conduit 38, open the second outlet valve 64 to open the second outlet 62 of the discharge conduit 38, operate the pump 34 to deliver the flow of fluid to the upstream end 52 of the single use filter 25 such that gas in the fluid supply conduit 37 is displaced to the vent conduit 90, cease operation of the pump 34 and/or close the vent valve 91 in response to receiving the liquid detection signal from the liquid sensor 87.

Referring to FIG. 9, the liquid has risen above the junction 82 and is extending toward the liquid sensor 87, thereby indicating that gas upstream of the single use filter 25 has been removed out through the vent conduit 90.

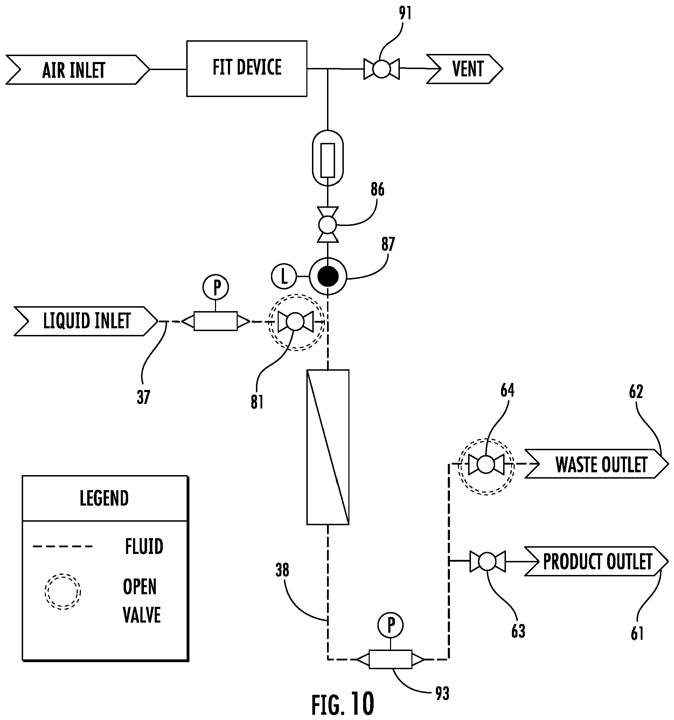

FIG. 10 is a schematic diagram of the fluid filtration system as in FIG. 5, illustrating a downstream filter priming operation. In response to the liquid sensor 87 detecting the presence of liquid, the control unit 45 has closed the test conduit valve 86 and the vent valve 91.

In embodiments, the filter priming module is configured to perform a downstream filter priming operation including the following steps when executed by the processor 71: close the vent valves 86, 91, open the fluid supply valve 81 to open the fluid supply conduit 37, close the first outlet valve 63 to occlude the first outlet 61 of the discharge conduit 38, open the second outlet valve 64 to open the second outlet 62 of the discharge conduit 38, operate the pump 34 to deliver the flow of fluid to the upstream end 52 of the single use filter 25, through the single use filter 25, and out of the second outlet 62 of the discharge conduit 38, cease operation of the pump 34 after a predetermined amount of time or in response to the pressure in the discharge conduit 38 reaching a predetermined value based upon the pressure signal for the pressure sensor 93.

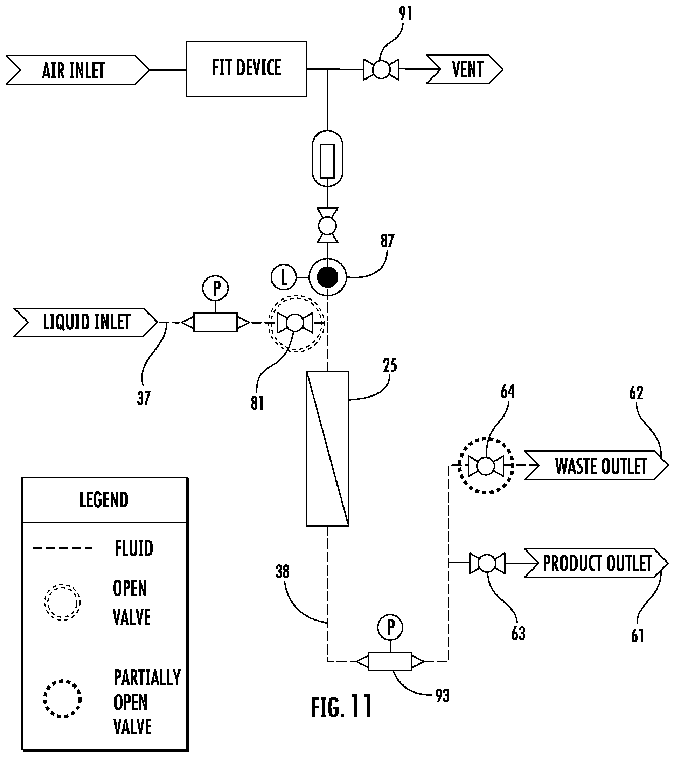

FIG. 11 is a schematic diagram of the fluid filtration system as in FIG. 5, illustrating a filter flushing operation. In embodiments, the control unit 45 is programmed with the filter conditioning program which contains a filter flushing module.

In embodiments, the filter flushing module is configured to perform the following steps as part of a flushing operation when executed by the processor 71. The test conduit valve 86 and the vent valve 91 are closed in response to receiving the liquid detection signal from the liquid sensor 87 The first outlet valve 63 is closed to occlude the first outlet 61 of the discharge conduit 38. The second outlet valve 64 is partially opened to partially open the second outlet 62 of the discharge conduit 38. The fluid supply valve 81 is opened to open the fluid supply conduit 37. The pump 34 is operated to deliver the flow of fluid to the single use filter 25 such that the flow of fluid passes through the single use filter 25 and the discharge conduit 38 and out of the second outlet 62 to thereby produce a backpressure in the discharge conduit 38. The pressure sensor 93 can be used as a feedback loop for the control unit 45 to monitor and adjust the position/orifice of the outlet valve 64 to produce a defined backpressure in the discharge conduit 38 to improve filter membrane wetting.

In embodiments, the filter flushing module is configured to sequentially open and close the second outlet valve 64 to sequentially open and close the second outlet 62 to thereby produce a pulsing effect in the discharge conduit 38. The pulsing effect can be modulated to help improve filter membrane wetting.

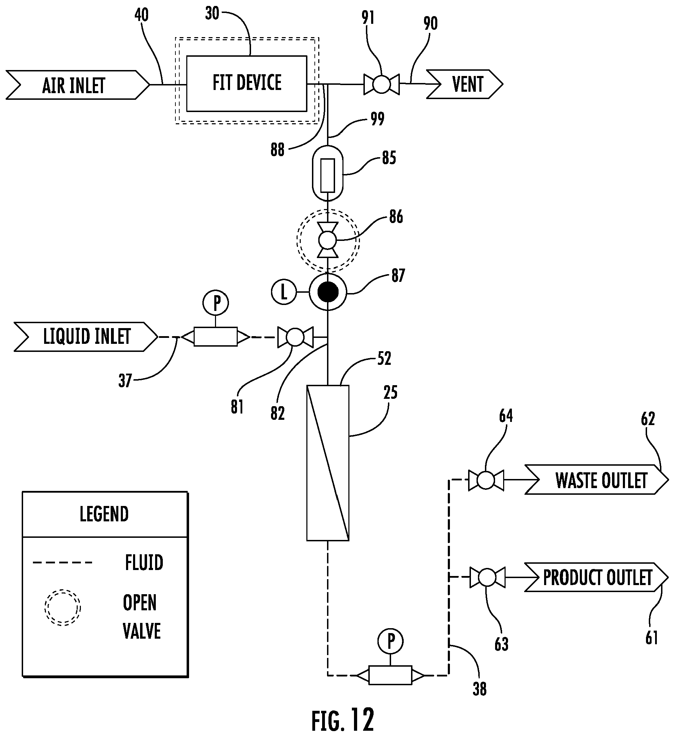

FIG. 12 is a schematic diagram of the fluid filtration system as in FIG. 5, illustrating an upstream filter pressurizing operation. In embodiments, the test conduit 40 comprises a pressurized gas supply conduit for delivering a supply of pressurized gas to the upstream end 52 of the single use filter 25 for pressurizing upstream of the single use filter 25.

The upstream end 52 of the single use filter is in fluid communication with the pressurized gas supply conduit 40. The pressurized gas supply conduit 40 is adapted to selectively direct a flow of pressurized gas therethrough to the upstream end 52 of the single use filter 25. In the illustrated embodiment, the integrity test device 30 is used to pressurize the upstream end 52 of the single use filter 25. In other embodiments, any suitable source of pressurized gas can be used, and the gas can be pressurized using other suitable equipment, as will be readily appreciated by one skilled in the art. Examples of other techniques for providing a source of pressurized gas include a suitable pump with pressure gauge configured to deliver the source of pressurized gas to a predetermined pressure set point. In embodiments, the pressurized gas supply conduit 40 is adapted to be connected to an external source of pressurized gas (e.g., a pressure tank) and to selectively direct a flow of pressurized gas therethrough to the upstream end 52 of the single use filter 25.

In the illustrated embodiment, the pressurized gas supply conduit 40 includes the integrity test device 30 which is adapted to be connected to a source of gas, to pressurize the gas, and to selectively direct a flow of pressurized gas through the pressurized gas supply conduit 40 to the upstream end 52 of the single use filter 25. The processor 71 is in electrical communication with the integrity test device 30 to selectively operate the integrity test device 30. In other embodiments, the integrity test device 30 can be omitted, and the pressurized gas supply conduit 40 can be in fluid communication with another means for delivering the pressurized gas (e.g., a pressure tank and/or compressor).

The junction 82 of the fluid supply conduit 37 comprises a first junction, and the pressurized gas supply conduit 40 includes a second junction (the vent junction 88). The vent conduit 90 is in fluid communication with the second junction 88 such that the upstream end 52 of the single use filter 25 is in fluid communication with the vent conduit 40 via the first junction 82 and the second junction 88 and such that a common branch 99 extends between the second junction 88 and the upstream end 52 of the single use filter 25.

The pressurized gas supply conduit 40 includes a gas supply valve 86 and an air filter 85. The liquid sensor 87, the gas supply valve 86, and the air filter 85 are disposed in the common branch 99. The liquid sensor is disposed between the first junction 82 and the gas supply valve 86. The gas supply valve 86 is disposed between the liquid sensor 87 and the air filter 85.

In embodiments, the filter conditioning program includes a filter pressurizing module configured to perform the following steps as part of a pressurizing operation when executed by the processor 71. The fluid supply valve 81 is closed to occlude the fluid supply conduit 37. The vent valve 91 is closed to occlude the vent conduit 90. The first and second outlet valves 63, 64 are closed to respectively occlude the first and second outlets 61, 62 of the discharge conduit 38. The flow of pressurized gas is directed through the pressurized gas supply conduit 40 to the upstream end 52 of the single use filter 25. In embodiments, the filter pressurizing module can be configured, when executed by the processor 71, to sequentially open and close the gas supply valve 86 to sequentially open and close the pressurized gas supply conduit 40, thereby producing a pulsing effect in the pressurized gas supply conduit 40.

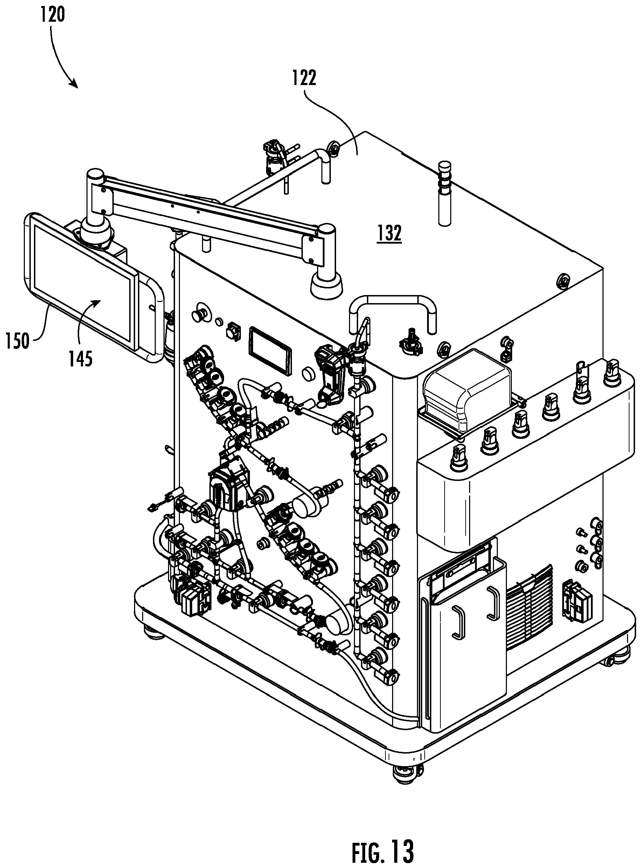

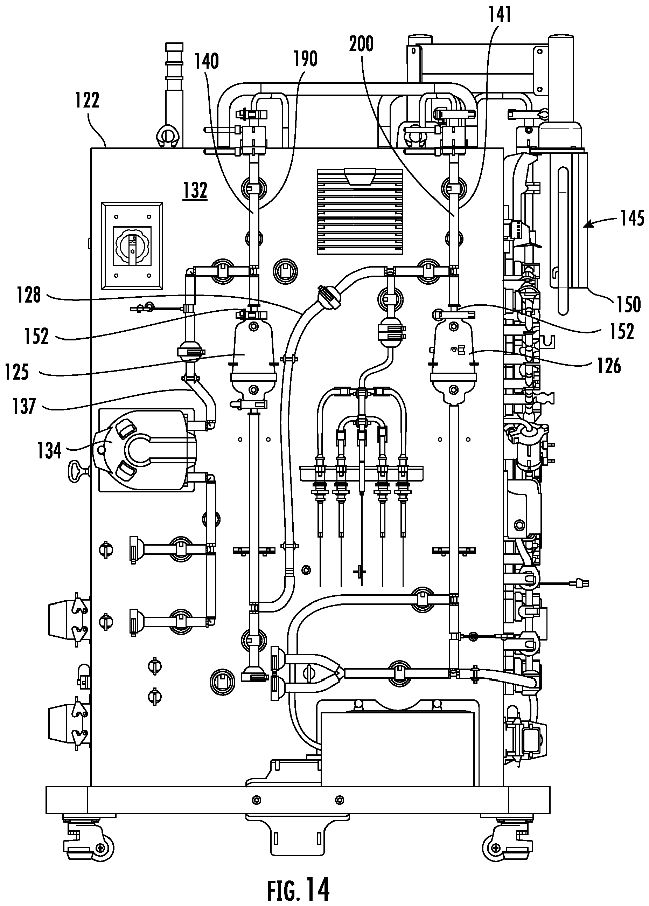

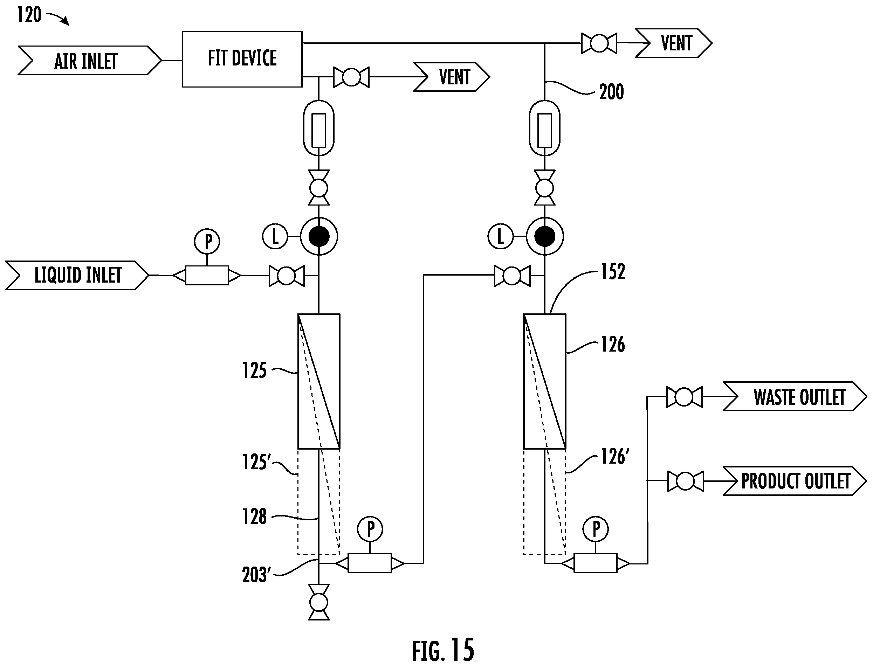

Referring to FIGS. 13 and 14, another embodiment of a filtration skid 122 constructed according to principles of the present disclosure is shown which includes an embodiment of a fluid filtration system 120 constructed in accordance with principles of the present disclosure that has a pair of single use filters 125, 126 fluidly connected in series *(see* FIG. 14, *and also,* FIG. 15). Referring to FIG. 15, a schematic diagram is shown of an embodiment of a fluid filtration system 120 constructed in accordance with principles of the present disclosure which is suitable for use with the skid 122 of FIGS. 13 and 14. The skid 122 is in the form of a bulk filling system as will be readily understood by one skilled in the art, and which is configured to accommodate single use filters 125, 126 with sizes up to a twenty-inch capsule size, as shown in dashed lines in FIG. 15.

Referring to FIGS. 13 and 14, the illustrated distributor skid 122 includes a cabinet 132, a pump 134, the pair of single use filters 125, 126 connected by a serial filter conduit 128, a fluid supply conduit 137, a discharge conduit 138, an integrity test device (not shown), first and second test conduits 140, 141, a first vent conduit 190, a second vent conduit 200, a control unit 145, and a display device 150. The pump 134 is supported by the cabinet 132 and is adapted to selectively produce a flow of fluid. In embodiments, the fluid filtration system 120 can be used with any suitable fluid, which can be stored in a suitable container, such as a tote, for example, which is in fluid communication with the pump 134. The first and second single use filters 125, 126 are removably mounted to the cabinet 132. The upstream end 152 of each single use filter 125, 126 is fluidly connected to the pump 134 via the fluid supply conduit 137 (and the serial filter conduit 128 in the case of the second single use filter 126) and to the integrity test device via the test conduits 140, 141. The integrity test device 130 is supported by the cabinet 132. In embodiments, the construction and operation of the skid 122 can be similar in other respects to the distributor skid shown and described in U.S. Patent Application No. 17/934,486, entitled, "Fluid Distribution System with Single Use Manifold Fluid Recovery Assembly," which is incorporated herein in its entirety by reference.

One skilled in the art will understand after reviewing the present disclosure that, in other embodiments, the system can have different configurations. For example, in embodiments, one or more pre-filters 135 can be provided upstream of the pair of single use filters 125, 126, and/or more than two single-use filters 125, 126 can be fluidly connected in series.

Referring to FIG. 15, the fluid filtration system 120 is configured to be used with a range of differently-sized single use filters 125, 126, such as sizes in a range from KA1 to NP7, as illustrated in FIG. 15. Gas hold-up below the first single use filter 125 in the serial filter conduit 128 can remain after priming filters sizes below NP7 (twenty inches) in the space that would otherwise be taken up by a larger filter. If left in place, this gas would be flushed to the second single use filter 126 causing air hold-up to the upstream end 152 of the second single use filter 126, thereby potentially reducing wetting during the flush of the second single use filter 126 and possible air ingress into the filter itself. The problem of residual gas remaining between serial single use filters 125, 126 can be exacerbated by the downstream components being positioned to accommodate the largest-sized filter in a range of filter sizes, such as KA1 to NP7, to allow a standard system for any filter in the range of sizes. In embodiment, the processor of the control unit 145 is configured to perform a priming operation on the first and second single use filters 125, 126 based upon instructions from a filter priming module borne on a non-transitory computer readable medium that can transfer residual gas in the serial filter conduit 128 to a position in the second vent conduit 200 just upstream of the upstream end 152 of the second single use filter 126. This residual gas can be vented to atmosphere via a priming operation of the second single use filter 126 via the second vent conduit 200.

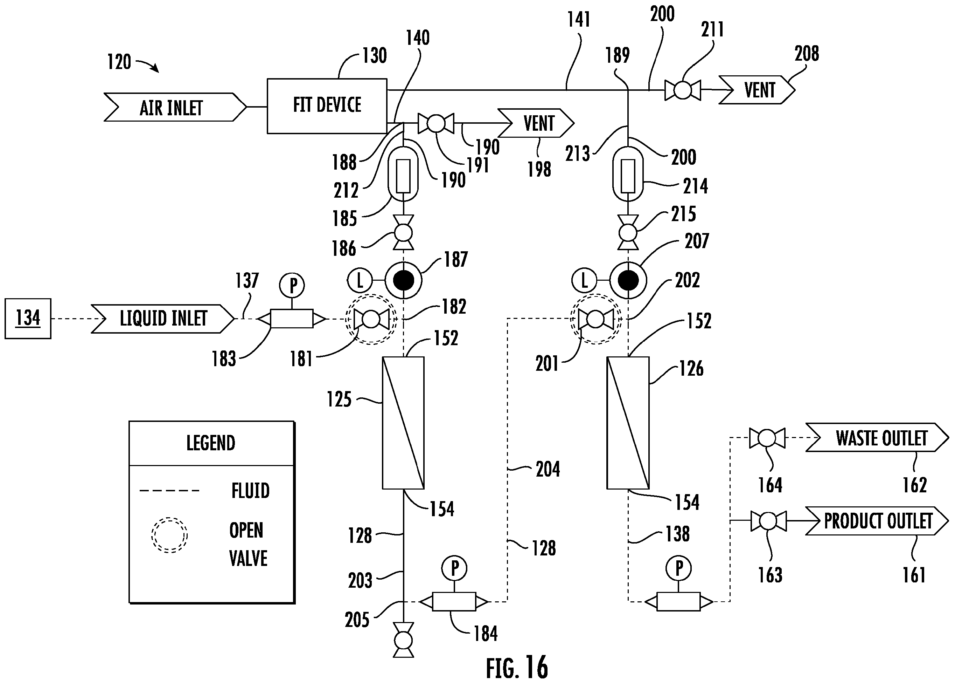

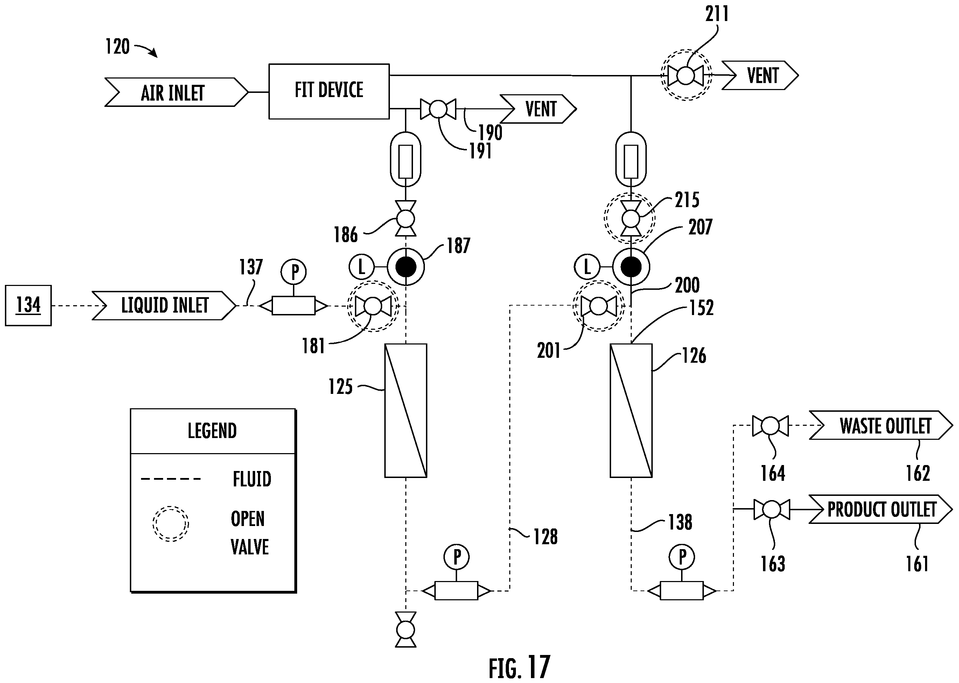

FIGS. 16 and 17 illustrate an air transfer operation carried out by the fluid filtration system 120. The illustrated arrangement includes two single use filters 125, 126. It should be understood that the description of this arrangement is applicable to embodiments of a fluid filtration system constructed according to principles of the present disclosure that include more than two single use filters fluidly connected in series. Referring to FIG. 16, the illustrated fluid filtration system 120 includes the pair of single use filters 125, 126 connected by the serial filter conduit 128, the fluid supply conduit 137, the discharge conduit 138, the integrity test device 130, the pair of test conduits 140, 141, the first vent conduit 190, and the second vent conduit 200. The pump 134 is in fluid communication with the fluid supply conduit 137 and is adapted to selectively produce a flow of fluid through the first and second single use filters 125, 126.

Referring to FIG. 16, the upstream end 152 of the first single use filter 125 is in fluid communication with the fluid supply conduit 137 and is in fluid communication with the pump 134 via the fluid supply conduit 137. The fluid supply conduit 137 includes a fluid supply valve 181 and a first vent junction 182. The fluid supply valve 137 is disposed between the first vent junction 182 and the pump 134. The first vent junction 182 is disposed between the fluid supply valve 181 and the upstream end 152 of the first single use filter 125.

The fluid supply conduit 137 includes a pressure sensor 183. The pressure sensor 183 is disposed upstream of the first single use filter 125 between the pump 134 and the first vent junction 182. The pressure sensor 183 is configured to generate a pressure signal indicative of the pressure measured in the fluid supply conduit 137. The control unit 145 is in electrical communication with the pressure sensor 183 to receive the pressure signal therefrom. In embodiments, the pressure sensor 183 can be used to confirm that the pump 134 is delivering a desired flow of fluid to the first single use filter 125.

The downstream end 154 of the first single use filter 125 is in fluid communication with the upstream end 152 of the second single use filter 126 via the serial filter conduit 128. The serial filter conduit 128 includes a serial filter valve 201 and a second vent junction 202. The serial filter valve 201 is disposed between the downstream end 154 of the first single use filter 125 and the second vent junction 202. The second vent junction 202 is disposed between the serial filter valve 201 and the upstream end 152 of the second single use filter 126.

The serial filter conduit 128 includes a tailpiece section 203 and a riser section 204. The tailpiece section 203 descends from the downstream end 154 of the first single use filter 125 to a point 205 below the upstream end 152 of the second single use filter 126. The riser section 204 ascends from the tailpiece section 203 to the upstream end 152 of the second single use filter 126.

Referring to FIG. 15, in embodiments, the fluid filtration system 120 is configured for use with a range of sizes for the first and second single use filters 125, 126. In the illustrated embodiment, the first and second single use filters 125, 126 are a first size, and the first and second single use filters 125', 126' shown in dashed lines are a second size which is taller than the first size. The first and second single use filters 125', 126' are adapted to be removably mounted to the workstation in place of the first and second single use filters 125, 126. In such instances, a second tailpiece 203' is used which is shorter than the tailpiece 203 shown in FIG. 16 in an amount sufficient to accommodate the taller first and second single use filters 125', 126'.

Referring back to FIG. 16, the serial filter conduit 128 includes a pressure sensor 184. The pressure sensor 184 is disposed downstream of the first single use filter 125 between low point 205 of the riser section 203 and the second vent junction 202. The pressure sensor 184 is configured to generate a pressure signal indicative of the pressure measured in the serial filter conduit 128. The control unit 145 is in electrical communication with the pressure sensor 184 to receive the pressure signal therefrom. In embodiments, the pressure sensor 184 can be used to detect whether the tailpiece section 203 includes residual gas therein.

In embodiments, at least one of the fluid supply conduit 137 and the serial filter conduit 128 includes a pressure sensor. In the illustrated embodiment, the fluid supply conduit 137 and the serial filter conduit 128 both include a pressure sensor 183, 184. The pressure sensors 183, 184 are both in electrical communication with the control unit 145 to transmit their pressure signals respectively thereto.

In embodiments, the fluid filtration system 120 can include means for removing gas trapped within the conduits to enhance the accuracy and consistency of the fluid filtering process, which in the illustrated embodiment, include the first and second vent conduits 190, 200 and equipment therein. The first vent conduit 190 is in fluid communication with the first vent junction 182 of the fluid supply conduit 137 such that the upstream end 152 of the first single use filter 125 is in fluid communication with the first vent conduit 190 via the first vent junction 182.

The first vent conduit 190 includes a first outlet 198, a first vent liquid sensor 187, and a first vent valve 191. The first liquid sensor 187 is disposed between the first vent junction 182 and the first outlet 198. The first vent valve 191 is disposed between the first liquid sensor 187 and the first outlet 198. The first vent liquid sensor 187 is configured to generate a first liquid detection signal in response to detecting liquid in the first vent conduit 190.

The control unit 145 is in electrical communication with the first vent liquid sensor 187 to receive the first liquid detection signal therefrom. The first vent valve 191 is in operable arrangement with the control unit 145 such that the control unit 145 can selectively operate the first vent valve 191 to open and occlude the first vent conduit 190.

The second vent conduit 200 is in fluid communication with the second vent junction 202 of the serial filter conduit 128 such that the upstream end 152 of the second single use filter 126 is in fluid communication with the second vent conduit 200 via the second vent junction 202. The second vent conduit 200 includes a second outlet 208, a second vent liquid sensor 207, and a second vent valve 211. The second vent liquid sensor 207 is disposed between the second vent junction 202 and the second outlet 208. The second vent valve 211 is disposed between the second vent liquid sensor 207 and the second outlet 208. The second vent liquid sensor 207 is configured to generate a second liquid detection signal in response to detecting liquid in the second vent conduit.

The control unit 145 is in electrical communication with the second vent liquid sensor 207 to receive the second liquid detection signal therefrom. The second vent valve 211 is in operable arrangement with the control unit 145 such that the control unit 145 can selectively operate the second vent valve 211 to open and occlude the second vent conduit 200.

The discharge conduit 138 is in fluid communication with the downstream end 154 of the second single use filter 126. The discharge conduit 138 includes a first outlet 161 and a second outlet 162 and a first outlet valve 163 and a second outlet valve 164 respectively associated with the first outlet 161 and the second outlet 162. The first outlet 161 is adapted for fluid connection to a product container, and the second outlet 162 is adapted for fluid connection to a waste repository.

The discharge conduit 138 includes a pressure sensor 193. The pressure sensor 193 is configured to generate a pressure signal indicative of the pressure measured in the discharge conduit 138. The control unit 145 is in electrical communication with the pressure sensor 193 to receive the pressure signal therefrom. In embodiments, the pressure sensor 193 can be used to confirm that the discharge conduit 138 is unpressurized.

In the illustrated embodiment, the pressurized gas supply conduits 140, 141 include the integrity test device 130 which is adapted to be connected to a source of gas, to pressurize the gas, and to selectively direct a flow of pressurized gas through one or both of the pressurized gas supply conduits 140, 141 to the upstream end 52 of the first and second single use filters 125, 126. The integrity test device 130 is operable to direct a flow of pressurized gas through the test conduits 140, 141 to perform a test operation on each single use filter 125, 126, respectively. In embodiments, the test operation comprises one of a forward flow test, a water intrusion test, a bubble point test, a leak test, and a pressure decay test. The processor of the control unit 145 is in electrical communication with the integrity test device 130 to selectively operate the integrity test device 130. In other embodiments, the integrity test device 130 can be omitted, and the pressurized gas supply conduits 140, 141 can be in fluid communication with another means for delivering the pressurized gas (e.g., a pressure tank and/or compressor).

The test conduits 140, 141 are fluidly connected to the single use filters 125, 126, respectively, via respective first and second vent junctions 188, 189 such that the first and second test conduits 140, 141 and the first and second vent conduits 190, 200 share a respective first and second common branch 212, 213. The first test conduit 140 includes a first air filter 185, a first test conduit valve 186, and the first vent liquid sensor 87. The second test conduit 141 includes a second air filter 214, a second test conduit valve 215, and the second vent liquid sensor 207.

The first and second air filters 185, 214 are each configured to filter particulate from fluid passing therethrough. The first and second air filters 185, 214 are disposed between the integrity test device 30 and the first and second single use filters 125, 126, respectively, such that the pressurized gas delivered to the first and second single use filters 125, 126 via the integrity test device 30 is filtered through the first and second air filter 185, 214, respectively.

The first and second test conduits 140, 141 include the first and second vent liquid sensor 187, 207 and the first and second test conduit valves 186, 215, respectively, to protect the first and second air filters 185, 214, respectively, from exposure to liquid. It should be understood that the discussion of the first vent liquid sensor 187 and the first test conduit valve 186 is equally applicable to the second vent liquid sensor 207 and the second test conduit valve 215.

The first test conduit valve 186 is arranged with the first test conduit 140 to selectively occlude the first test conduit 140. The first liquid sensor 187 is disposed between the integrity test device 130 and the first vent junction 182, and in particular between the first air filter 185 and the first vent junction 182. The first test conduit valve 186 is disposed between the first air filter 185 and the first liquid sensor 187.

The first test conduit valve 186 is in operable arrangement with the control unit 145 such that the control unit 145 can operate the test conduit valve 186 in response to receiving the first liquid detection signal from the first vent liquid sensor 187. In embodiments, the control unit 145 is configured to cease operation of the pump(s) 134 and/or close the first test conduit valve 186 in response to receiving the first liquid detection signal from the first vent liquid sensor 187 to prevent the air filter 185 from becoming wetted with fluid.

The control unit 145 is in electrical communication with the first and second vent liquid sensors 187, 207 to receive the first and second liquid detection signals respectively therefrom. The control unit includes a processor and a non-transitory computer readable medium bearing a filter conditioning program containing a filter priming module. The processor is arranged with the computer readable medium to execute the filter conditioning program. The processor is configured to perform a priming operation on the first and second single use filters based upon instructions from the filter priming module.

In embodiments, the control unit 145 is programmed with the filter conditioning program which contains a filter priming module. In embodiments following principles of the present disclosure, the filter priming module is configured, when executed by the processor, to transfer residual air trapped in the serial filter conduit 128 (such as is shown in FIG. 16) fluidly connecting first and second single use filters 125, 126 in serial relationship out of the system 120 to facilitate the use of different sized single use filters on a particular skid. In at least some of such embodiments, the filter priming module is configured, when executed by the processor, to prime the second single use filter 126 after the residual air in the serial filter conduit 128 is transferred over to the second vent conduit 200, such as is shown in FIG. 17. In at least some of such embodiments, the filter priming module is configured, when executed by the processor, to prime the first single use filter 125 after the residual air in the serial filter conduit 128 is transferred over to the second vent conduit 200. In at least some of such embodiments, the filter priming module is configured, when executed by the processor, to prime the first single use filter 125 after the residual air in the serial filter conduit 128 is transferred over to the second vent conduit 200 and after the second single use filter 126 is primed.

Referring to FIG. 16, in embodiments, the filter priming module is configured to perform the following steps when executed by the processor to transfer residual air trapped in the serial filter conduit 128: open the fluid supply valve 181 to open the fluid supply conduit 137, open the serial filter valve 201 to open the serial filter conduit 128, operate the pump 134 to deliver the flow of fluid to the upstream end 152 of the second single use filter 126 such that gas in the serial filter conduit 128 (shown in FIG. 16 in the tailpiece section 203) is displaced to the second vent conduit 200, cease operation of the pump 134 in response to the cessation of receiving the second liquid detection signal in response to detecting no liquid in the second vent conduit 200 at the location of the second vent liquid sensor 207. In at least some of such embodiments, the filter priming module, when executed by the processor, is configured to prime the second single use filter 126 after ceasing operation of the pump 134 in response to detecting no liquid at the second vent liquid sensor 207.

Referring to FIG. 17, in embodiments, the filter priming module, when executed by the processor, is configured to prime the second single use filter 126 after ceasing operation of the pump 134 in response to detecting no liquid at the second vent liquid sensor 207, as is shown in FIG. 17. In at least some of such embodiments, the filter priming module is configured to perform, when executed by the processor, the following steps as part of priming the second single use filter 126 after ceasing operation of the pump 134 in response to detecting no liquid at the second vent liquid sensor 207: open the fluid supply valve 181 to open the fluid supply conduit 137, open the serial filter valve 201 to open the serial filter conduit 128, open the second vent valve 211 (and the second test conduit valve 215) to open the second vent conduit 200, operate the pump 134 to deliver the flow of fluid to the upstream end 152 of the second single use filter 126 such that gas upstream of the upstream end 152 of the second single use filter 126 is displaced to the second vent conduit 200, cease operation of the pump 134 and/or close the second vent valve 211 (and the second test conduit valve 215) in response to receiving the second liquid detection signal from the second vent liquid sensor 207.

In at least some of such embodiments, the filter priming module is configured to perform the following steps as part of priming the second single use filter 126 when executed by the processor: close the second vent valve 211 in response to receiving the second liquid detection signal from the second vent liquid sensor 207, operate the pump 134 to deliver the flow of fluid to the second single use filter 126 such that the flow of fluid passes through the second single use filter 126 and the discharge conduit 138 and out of the second outlet 162.

In embodiments, the filter priming module, when executed by the processor, is configured to prime the first single use filter 125 after ceasing operation of the pump 134 in response to detecting no liquid at the second vent liquid sensor 207. In at least some of such embodiments, the filter priming module is configured to perform the following steps as part of the priming operation when executed by the processor: open the fluid supply valve 181 to open the fluid supply conduit 137, open the first vent valve 191 (and the first test conduit valve 186) to open the first vent conduit 190, operate the pump 134 to deliver the flow of fluid to the upstream end 152 of the first single use filter 125 such that gas in the fluid supply conduit 137 is displaced to the first vent conduit 190, cease operation of the pump 134 and/or close the first vent valve 191 (and the first test conduit valve 186) in response to receiving the first liquid detection signal from the first vent liquid sensor 187.

In at least some of such embodiments, the filter priming module is configured to perform the following steps as part of the priming operation when executed by the processor: close the first outlet valve 163 to occlude the first outlet 161, open the second outlet valve 164 to open the second outlet 162, close the first vent valve 191 (and the first test conduit valve 186) in response to receiving the liquid detection signal from the first vent liquid sensor 187, operate the pump 134 to deliver the flow of fluid to the first single use filter 125 such that the flow of fluid passes through the first single use filter 125 and the discharge conduit 138 and out of the second outlet 162.

In other embodiments, the fluid filtration system can include different and additional equipment configured to hold the supply of fluid for delivery to the single use filters. For example, in other embodiments, a fluid filtration system constructed according to principles of the present disclosure can include at least one tower configured to hold one or more totes filled with a fluid for use with the fluid filtration system. In other embodiments, a fluid filtration system constructed according to principles of the present disclosure can include one or more tanks filled with a fluid for use in the system.

In other embodiments of a fluid filtration system constructed in accordance with principles of the present disclosure, the fluid filtration system construction can take alternatives forms. For example, in embodiments, the fluid filtration system can be scaled for larger volumes or decreased for laboratory usage. In embodiments, a fluid filtration system constructed according to principles of the present disclosure can be used to process a variety of liquids to meet the requirements of a desired application.

In embodiments of a method of using a fluid filtration system following principles of the present disclosure, any suitable embodiment of a fluid filtration system according to principles discussed herein can be used. In embodiments, a method of using a fluid filtration system following principles of the present disclosure comprises using a filtration skid having a FIT device integrated therein according to principles of the present disclosure. In embodiments, a method of using a fluid filtration system following principles of the present disclosure comprises integrity testing a single use filter in-situ.

In one embodiment, a method of conducting in-situ integrity testing of a single use filter includes removably mounting a single use filter to a workstation. The workstation includes a cabinet. An upstream end of the single use filter is fluidly connected to a pump via a fluid supply conduit and to an integrity test device via a test conduit. The pump and the integrity test device are supported by the cabinet. The integrity test device is fluidly connected to a source of pressurized gas, such as pressurized air or nitrogen, for example. The integrity test device is operated to direct a flow of pressurized gas through the test conduit to perform a test operation on the single use filter. In embodiments, the test operation comprises one of a forward flow test, a water intrusion test, a bubble point test, a leak test, and a pressure decay test. In embodiments, operating the integrity test device to perform the test operation includes determining whether a test condition of the test operation is satisfied based upon the pressure measured within the discharge conduit. In embodiments, the FIT device is configured to determine PASS or FAIL of the test based on the selected test method (forward flow, bubble point, pressure decay, etc.) and related test parameters (e.g. pressure, flow, etc.).

In embodiments, the integrity test device is operated to perform the test operation by executing an integrity test program stored upon a non-transitory computer-readable medium using a processor. In embodiments, the processor executes the integrity test program to determine whether the single use filter satisfied the test operation. A graphical display containing a graphical indication of whether the single use filter satisfied the test operation is generated. The graphical display is displayed on a display device.

In embodiments, the fluid supply conduit includes a fluid supply valve and a test junction. The test conduit includes a test conduit valve, and the test conduit is fluidly connected to the single use filter via the test junction of the fluid supply conduit. In embodiments, the method further includes closing the fluid supply valve to occlude the fluid supply conduit during the test operation. The test conduit valve is opened to open the test conduit during the test operation.

In embodiments, the test conduit includes a vent junction. In embodiments, the method further includes closing a vent valve to occlude a vent conduit during the test operation. The vent conduit is in fluid communication with the test conduit via the vent junction. In embodiments, the method further includes opening the vent valve to open the vent conduit after completing the test operation to permit pressurized gas upstream of the single use filter to vent out of the test conduit into the vent conduit.

In embodiments, a discharge conduit is in fluid communication with a downstream end of the single use filter. The discharge conduit includes first and second outlets and first and second outlet valves respectively associated with the first and second outlets. In embodiments, the method further includes closing a first outlet valve to occlude the first outlet, the first outlet fluidly connected to a product container. The second outlet valve is opened to open the second outlet. The second outlet is fluidly connected to a waste repository.

In embodiments, the method further includes measuring a pressure within the discharge conduit. In embodiments, operating the integrity test device to perform the test operation includes determining whether a test condition of the test operation is satisfied based upon the pressure measured within the discharge conduit. In embodiments, operating the FIT device does not include measuring the pressure within the discharge conduit (downstream of the single use filter). The discharge conduit 38 is understood to be unpressurized as the waste outlet is unpressurized.

In embodiments, the FIT device has an internal flow sensor and an internal pressure that can be operated to determine the pressure in the test conduit and upstream part of the single use filter in the area of the test junction. In embodiments, the method includes measuring a pressure within the test conduit upstream of the single use filter. In embodiments, operating the integrity test device to perform the test operation includes determining whether a test condition of the test operation is satisfied based upon the pressure measured within the test conduit.

In embodiments, a discharge conduit is in fluid communication with a downstream end of the single use filter. The discharge conduit includes a first outlet and a second outlet and a first outlet valve and a second outlet valve respectively associated with the first outlet and the second outlet. In embodiments, the method further includes closing the first outlet valve to occlude the first outlet. The first outlet is fluidly connected to a product container for receiving filtered fluid for end use. The second outlet valve is opened to open the second outlet. The second outlet is fluidly connected to a waste repository. In other embodiments, the method further includes opening a first outlet valve to open the first outlet. The first outlet is fluidly connected to a product container. The second outlet valve is closed to occlude the second outlet. The second outlet is fluidly connected to a waste repository.

In another aspect, the present disclosure is directed to embodiments of techniques for conditioning a single use filter in a fluid filtration system. In embodiments, any suitable embodiment of a fluid filtration system according to principles discussed herein can be used in a method of conditioning a single use filter in a fluid filtration system following principles of the present disclosure. In one embodiment, a method of conditioning a single use filter in a fluid filtration system includes removably mounting a single use filter to a workstation. The workstation includes a cabinet. An upstream end of the single use filter is fluidly connected to a pump via a fluid supply conduit. The pump is supported by the cabinet. The fluid supply conduit includes a junction and a fluid supply valve. The fluid supply valve is disposed between the junction and the pump. The fluid supply valve is opened to open the fluid supply conduit.

In embodiments, the method further includes closing the test conduit valve and the vent valve in response to receiving the liquid detection signal. A first outlet valve is closed to occlude a first outlet of a discharge conduit. The discharge conduit is in fluid communication with a downstream end of the single use filter. A second outlet valve is at least partially opened to at least partially open a second outlet of the discharge conduit. The pump is operated to deliver the flow of fluid to the single use filter such that the flow of fluid passes through the single use filter, into the discharge conduit, and out of the second outlet of the discharge conduit.

In embodiments, the method further includes closing the fluid supply valve to occlude the fluid supply conduit. The vent valve is closed to occlude the vent conduit. The first outlet valve is closed to occlude the first outlet. The second outlet valve is closed to occlude the second outlet. A flow of pressurized gas is directed through a pressurized gas supply conduit to the upstream end of the single use filter.

In other embodiments following principles of the present disclosure, a method of conditioning a fluid filtration system includes removably mounting a first single use filter and a second single use filter to a workstation. The workstation includes a cabinet.

In embodiments following principles of the present disclosure, residual air trapped in the serial filter conduit fluidly connecting first and second single use filters in serial relationship can be transferred out of the system to facilitate the use of different sized single use filters on a particular skid. In embodiments, an upstream end of the first single use filter is fluidly connected to a pump via a fluid supply conduit. The pump is supported by the cabinet. The fluid supply conduit includes a first vent junction and a fluid supply valve. The fluid supply valve is disposed between the first vent junction and the pump.

A downstream end of the first single use filter is fluidly connected to an upstream end of the second single use filter to via a serial filter conduit. The serial filter conduit includes a second vent junction and a serial filter valve. The serial filter valve is disposed between the downstream end of the first single use filter and the second vent junction.

The fluid supply valve is opened to open the fluid supply conduit. The serial filter valve is opened to open the serial filter conduit. The pump is operated to deliver the flow of fluid toward the upstream end of the second single use filter such that gas in the serial filter conduit is displaced to a second vent conduit via the second vent junction. Operation of the pump is ceased in response to the cessation of receiving the second liquid detection signal in response to detecting no liquid in the second vent conduit at a predetermined location.

In embodiments following principles of the present disclosure, the second single use filter can be primed after the residual air in the serial filter conduit is transferred over to the second vent conduit. In embodiments, the fluid supply valve is opened to open the fluid supply conduit. The serial filter valve is opened to open the serial filter conduit. The second vent valve is opened to open the second vent conduit. The pump is operated to deliver the flow of fluid to the upstream end of the second single use filter such that gas upstream of the upstream end of the second single use filter is displaced to the second vent conduit.

Operation of the pump is ceased and/or the second vent valve is closed in response to detecting liquid in the second vent conduit at a predetermined location, such as by using the second liquid sensor.

In at least some of such embodiments, the second vent valve is closed in response to detecting liquid in the second vent conduit at the predetermined location. The pump is operated to deliver the flow of fluid to the second single use filter such that the flow of fluid passes through the second single use filter into a discharge conduit and out of an outlet thereof.

In embodiments following principles of the present disclosure, the first single use filter can be primed after the residual air in the serial filter conduit is transferred over to the second vent conduit. In embodiments, the first and second single use filters can be primed as discussed above. The fluid supply valve, the serial filter valve, and an outlet valve of the discharge conduit are opened. The pump draws liquid from the liquid inlet toward the downstream end of the second single use filter. The pump is stopped when "no liquid" is detected at the second liquid sensor in the second vent conduit which in embodiments is a result of the gas trapped in the serial filter conduit being displaced to the midsection between the first and second single use filters at a position just upstream of the upstream end of the second single use filter. The second single use filter can be re-primed as discussed above. In embodiments, the first single use filter can be re-primed if the liquid level in the first vent conduit has dipped below the liquid level sensor in the first vent conduit.

In embodiments, the fluid supply valve is opened to open the fluid supply conduit. The first vent valve is opened to open a first vent conduit in fluid communication with the first vent junction. The pump is operated to deliver the flow of fluid to the upstream end of the first single use filter such that gas in the fluid supply conduit is displaced to the first vent conduit via the first vent junction. Operation of the pump is ceased and/or the first vent valve is closed in response to detecting liquid in the first vent conduit at a predetermined location.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A fluid filtration system comprising:
a workstation, the workstation including a cabinet;
a pump, the pump supported by the cabinet and adapted to selectively produce a flow of fluid;
a first single use filter, the first single use filter removably mounted to the workstation, the first single use filter having an upstream end and a downstream end;
a second single use filter, the second single use filter removably mounted to the workstation, the second single use filter having an upstream end and a downstream end;
a fluid supply conduit, the upstream end of the first single use filter being in fluid communication with the pump via the fluid supply conduit, the fluid supply conduit including a first vent junction and a fluid supply valve, the fluid supply valve disposed between the first vent junction and the pump;
a serial filter conduit, the downstream end of the first single use filter being in fluid communication with the upstream end of the second single use filter via the serial filter conduit, the serial filter conduit including a second vent junction and a serial filter valve, the serial filter valve disposed between the downstream end of the first single use filter and the second vent junction;
a first vent conduit, the first vent conduit being in fluid communication with the first vent junction of the fluid supply conduit such that the upstream end of the first single use filter is in fluid communication with the first vent conduit via the first vent junction, the first vent conduit including a first outlet, a first liquid sensor, and a first vent valve, the first liquid sensor disposed between the first vent junction and the first outlet, the first vent valve disposed between the first liquid sensor and the first outlet, the first liquid sensor configured to generate a first liquid detection signal in response to detecting liquid in the first vent conduit;
a second vent conduit, the second vent conduit being in fluid communication with the second vent junction of the serial filter conduit such that the upstream end of the second single use filter is in fluid communication with the second vent conduit via the second vent junction, the second vent conduit including a second outlet, a second liquid sensor, and a second vent valve, the second liquid sensor disposed between the second vent junction and the second outlet, the second vent valve disposed between the second liquid sensor and the second outlet, the second liquid sensor configured to generate a second liquid detection signal in response to detecting liquid in the second vent conduit;
a control unit, the control unit in electrical communication with the first and second liquid sensors to receive the first and second liquid detection signals respectively therefrom, the control unit including a processor and a non-transitory computer readable medium bearing a filter conditioning program containing a filter priming module, the processor arranged with the computer readable medium to execute the filter conditioning program, the processor being configured to perform a priming operation on the first and second single use filters based upon instructions from the filter priming module.

2. The fluid filtration system according to claim 1, wherein the serial filter conduit includes a tailpiece section and a riser section, the tailpiece section descending from the downstream end of the first single use filter to a point below the upstream end of the second single use filter, and the riser section ascending from the tailpiece section to the upstream end of the second single use filter;
optionally wherein the first and second single use filters are a first size, and the tailpiece comprises a first tailpiece, the system further comprising:
a third single use filter and a fourth single use filter, the third and fourth single use filters being a second size, the second size being taller than the first size, the third and fourth single use filters being adapted to be removably mounted to the workstation in place of the first and second single use filters, respectively;
a second tailpiece, the second tailpiece being shorter than the first tailpiece in an amount sufficient to accommodate the taller second size of the third single use filter.

3. The fluid filtration system according to claim 1 or claim 2, wherein the filter priming module is configured to perform the following steps when executed by the processor:
open the fluid supply valve to open the fluid supply conduit,
open the serial filter valve to open the serial filter conduit,
operate the pump to deliver the flow of fluid to the upstream end of the second single use filter such that gas in the serial filter conduit is displaced to the second vent conduit,
cease operation of the pump in response to the cessation of receiving the second liquid detection signal in response to detecting no liquid in the second vent conduit at the location of the second liquid sensor.

4. The fluid filtration system according to claim 3, wherein the filter priming module, when executed by the processor, is configured to prime the second single use filter after ceasing operation of the pump in response to detecting no liquid at the second liquid sensor;
wherein optionally the filter priming module is configured to perform, when executed by the processor, the following steps as part of priming the second single use filter after ceasing operation of the pump in response to detecting no liquid at the second liquid sensor:
open the fluid supply valve to open the fluid supply conduit,
open the serial filter valve to open the serial filter conduit,
open the second vent valve to open the second vent conduit,
operate the pump to deliver the flow of fluid to the upstream end of the second single use filter such that gas upstream of the upstream end of the second single use filter is displaced to the second vent conduit,
cease operation of the pump and/or close the second vent valve in response to receiving the second liquid detection signal.

5. The fluid filtration system according to claim 4, further comprising:
a discharge conduit, the discharge conduit being in fluid communication with the downstream end of the second single use filter, the discharge conduit including a first outlet and a second outlet and a first outlet valve and a second outlet valve respectively associated with the first outlet and the second outlet, the first outlet adapted for fluid connection to a product container and the second outlet adapted for fluid connection to a waste repository.

6. The fluid filtration system according claim 5, wherein the filter priming module is configured to perform the following steps as part of priming the second single use filter when executed by the processor:
close the second vent valve in response to receiving the second liquid detection signal,
operate the pump to deliver the flow of fluid to the second single use filter such that the flow of fluid passes through the second single use filter and the discharge conduit and out of the second outlet.

7. The fluid filtration system according to claim 4, wherein the filter priming module is configured to perform the following steps as part of the priming operation when executed by the processor:
open the fluid supply valve to open the fluid supply conduit,
open the first vent valve to open the first vent conduit,
operate the pump to deliver the flow of fluid to the upstream end of the first single use filter such that gas in the fluid supply conduit is displaced to the first vent conduit,
cease operation of the pump and/or close the first vent valve in response to receiving the first liquid detection signal;
wherein optionally the fluid filtration system further comprises: a discharge conduit, the discharge conduit being in fluid communication with the downstream end of the second single use filter, the discharge conduit including a first outlet and a second outlet and a first outlet valve and a second outlet valve respectively associated with the first outlet and the second outlet, the first outlet adapted for fluid connection to a product container and the second outlet adapted for fluid connection to a waste repository;
wherein the filter priming module is configured to perform the following steps as part of the priming operation when executed by the processor:
close the first outlet valve to occlude the first outlet,
open the second outlet valve to open the second outlet,
close the first vent valve in response to receiving the liquid detection signal,
operate the pump to deliver the flow of fluid to the first single use filter such that the flow of fluid passes through the first single use filter and the discharge conduit and out of the second outlet.

8. The fluid filtration system according to any one of claim 1 to claim 7, wherein the fluid supply conduit includes a pressure sensor, the pressure sensor disposed upstream of the first single use filter between the pump and the first junction.

9. A fluid filtration system comprising:
a first single use filter and a second single use filter, each having an upstream end and a downstream end;
a fluid supply conduit, the upstream end of the first single use filter being in fluid communication with the fluid supply conduit, the fluid supply conduit including a first vent junction and a fluid supply valve, the first vent junction disposed between the fluid supply valve and the upstream end of the first single use filter;
a serial filter conduit, the downstream end of the first single use filter being in fluid communication with the upstream end of the second single use filter via the serial filter conduit, the serial filter conduit including a second vent junction and a serial filter valve, the serial filter valve is disposed between the downstream end of the first single use filter and the second vent junction, the second vent junction disposed between the serial filter valve and the upstream end of the second single use filter;
a first vent conduit, the first vent conduit being in fluid communication with the first vent junction of the fluid supply conduit such that the upstream end of the first single use filter is in fluid communication with the first vent conduit via the first vent junction;
a second vent conduit, the second vent conduit being in fluid communication with the second vent junction of the serial filter conduit such that the upstream end of the second single use filter is in fluid communication with the second vent conduit via the second vent junction, the second vent conduit including a second vent liquid sensor, the second vent liquid sensor configured to generate a second liquid detection signal in response to detecting liquid in the second vent conduit;
a control unit, the control unit in electrical communication with the second vent liquid sensor to receive the second liquid detection signal therefrom, the control unit including a processor and a non-transitory computer readable medium bearing a filter conditioning program containing a filter priming module, the processor arranged with the computer readable medium to execute the filter conditioning program, the processor being configured to perform a priming operation on the first and second single use filters based upon instructions from the filter priming module.

10. The fluid filtration system according claim 9, wherein the second vent conduit includes a second vent outlet and a second vent valve, the second vent liquid sensor disposed between the second vent junction and the second vent outlet, the second vent valve disposed between the second vent liquid sensor and the second vent outlet;
wherein optionally the first vent conduit includes a first vent outlet, a first vent liquid sensor, and a first vent valve, the first vent liquid sensor disposed between the first vent junction and the first vent outlet, the first vent valve disposed between the first vent liquid sensor and the first vent outlet, the first vent liquid sensor configured to generate a first liquid detection signal in response to detecting liquid in the first vent conduit, and wherein the control unit is in electrical communication with the first vent liquid sensor to receive the first liquid detection signal therefrom.

11. The fluid filtration system according to any one of claim 9 or claim 10, wherein at least one of the fluid supply conduit and the serial filter conduit includes a pressure sensor.

12. The fluid filtration system according to any one of claim 9 to claim 11, further comprising:
a discharge conduit, the discharge conduit being in fluid communication with the downstream end of the second single use filter, the discharge conduit including a first outlet and a second outlet and a first outlet valve and a second outlet valve respectively associated with the first outlet and the second outlet, the first outlet adapted for fluid connection to a product container and the second outlet adapted for fluid connection to a waste repository.

13. A method of conditioning a fluid filtration system, the method comprising:
removably mounting a first single use filter and a second single use filter to a workstation, the workstation including a cabinet;
fluidly connecting an upstream end of the first single use filter to a pump via a fluid supply conduit, the pump supported by the cabinet, the fluid supply conduit including a first vent junction and a fluid supply valve, the fluid supply valve disposed between the first vent junction and the pump;
fluidly connecting a downstream end of the first single use filter to an upstream end of the second single use filter to via a serial filter conduit, the serial filter conduit including a second vent junction and a serial filter valve, the serial filter valve disposed between the downstream end of the first single use filter and the second vent junction;
opening the fluid supply valve to open the fluid supply conduit;
opening the serial filter valve to open the serial filter conduit;
operating the pump to deliver the flow of fluid toward the upstream end of the second single use filter such that gas in the serial filter conduit is displaced to a second vent conduit via the second vent junction;
ceasing operation of the pump in response to the cessation of receiving the second liquid detection signal in response to detecting no liquid in the second vent conduit at a predetermined location.

14. The method according to claim 13, further comprising:
opening the fluid supply valve to open the fluid supply conduit;
opening the serial filter valve to open the serial filter conduit;
opening a second vent valve to open the second vent conduit;
operating the pump to deliver the flow of fluid to the upstream end of the second single use filter such that gas upstream of the upstream end of the second single use filter is displaced to the second vent conduit,
ceasing operation of the pump and/or closing the second vent valve in response to detecting liquid in the second vent conduit at the predetermined location;
said method optionally further comprising:
closing the second vent valve in response to detecting liquid in the second vent conduit at the predetermined location;
operating the pump to deliver the flow of fluid to the second single use filter such that the flow of fluid passes through the second single use filter into a discharge conduit and out of an outlet thereof.

15. The method according to claim 14, further comprising:
opening the fluid supply valve to open the fluid supply conduit;
opening the first vent valve to open a first vent conduit in fluid communication with the first vent junction;
operating the pump to deliver the flow of fluid to the upstream end of the first single use filter such that gas in the fluid supply conduit is displaced to the first vent conduit via the first vent junction;
ceasing operation of the pump and/or closing the first vent valve in response to detecting liquid in the first vent conduit at a predetermined location.
